(19) Europäisches Patentamt

European Patent Office

Office européen des brevets

(11) **EP 1 075 921 B1**

(12) **EUROPEAN PATENT SPECIFICATION**

(45) Date of publication and mention
of the grant of the patent:
**06.09.2006  Bulletin 2006/36**

(51) Int Cl.:
*B29C 47/06* (2006.01)    *B29C 47/28* (2006.01)
*B32B 37/00* (2006.01)    *B29C 44/22* (2006.01)
*B29C 47/00* (2006.01)    *B29C 44/34* (2006.01)
*B32B 5/18* (2006.01)

(21) Application number: **00116438.3**

(22) Date of filing: **28.07.2000**

(54) **Multilayer polyolefin foamed sheet and method and apparatus for producing the same**

Mehrschichtige geschäumte Polyolefin-Folie, Verfahren und Vorrichtung zur deren Herstellung

Feuille de mousse multicouche en polyoléfine, procédé et dispositif pour sa fabrication

(84) Designated Contracting States:
**DE FR GB IT**

(30) Priority: **12.08.1999  JP 22872299**
**12.08.1999  JP 22878299**
**12.08.1999  JP 22861099**
**12.08.1999  JP 22850299**
**12.08.1999  JP 22854199**
**12.08.1999  JP 22846599**
**12.01.2000  JP 2000003252**

(43) Date of publication of application:
**14.02.2001  Bulletin 2001/07**

(73) Proprietor: **Sumitomo Chemical Company,
Limited
Tokyo 104-8260 (JP)**

(72) Inventors:
• **Nodono, Mitsunori
Ibaraki-shi,
Osaka (JP)**
• **Kuroda, Ryuma
Ibaraki-shi,
Osaka (JP)**
• **Kitayama, Takeo
Ibaraki-shi,
Osaka (JP)**
• **Hanada, Satoshi
Ibaraki-shi,
Osaka (JP)**
• **Matsubara, Shigeyoshi
Osaka-shi,
Osaka (JP)**

(74) Representative: **Kuhnen & Wacker
Patent- und Rechtsanwaltsbüro
Postfach 19 64
85319 Freising (DE)**

(56) References cited:
DE-A- 4 037 018          DE-U- 9 300 545
GB-A- 1 482 325          GB-A- 2 185 936
US-A- 3 426 111          US-A- 3 822 331
US-A- 4 049 768          US-A- 4 231 832
US-A- 4 522 675          US-A- 4 533 576
US-A- 4 813 208          US-A- 5 000 992
US-A- 5 916 615

• **PATENT ABSTRACTS OF JAPAN vol. 009, no. 322
(M-440), 18 December 1985 (1985-12-18) & JP 60
157824 A (SUMITOMO KAGAKU KOGYO KK), 19
August 1985 (1985-08-19)**

**Description**

BACKGROUND OF THE INVENTION

1. Field of the Invention

The present invention relates to a process for producing a multilayer polyolefin foamed sheet, and concretely to a process and an apparatus for producing a multilayer polyolefin foamed sheet which has a smooth surface and is excellent in vacuum formability. Further, the present invention specifically relates to a multilayer polyolefin foamed sheet excellent in vacuum formability and to a foamed container body and a foamed container using the same.

2. Description of the Related Art

As cups, trays and containers for home-meal-replacement (HMR), which is cooked food to be heated by a microwave oven, foam with heat resistance has been used so that the containers have light weight and can be touched by hands after heating. Polystyrene foam is used today.

Polystyrene, however, does not have sufficient heat resistance. In place of this, polyolefin-based resin foam, in particular, polypropylene foam, which has high heat resistance, is attracting much attention.

Foams of polyolefin such as polyethylene and polypropylene are known. Examples of the known polyolefin foams include ones produced by using chemical foaming agents such as azodicarbonamide-based compounds and nitroso compounds, ones produced by using low-boiling aliphatic hydrocarbons such as propane and butane as a foaming agent, ones produced by using a carbonic acid gas, and the like.

The use of chemical foaming agents is not preferable from the viewpoint of cost, however. On the other hand, when carbonic acid gas is used as a foaming agent, burst of cells is liable to occur during the foaming step and the production of foam itself is difficult. Some polypropylenes that can be relatively easily formed into foam are known. Even if such polypropylenes are used, the foamed sheets obtained by carbonic-acid-gas-foaming according to conventional producing methods have insufficient vacuum formability. Thus, when these sheets are vacuum-formed to containers for foods, burst of cells occurs, causing problems of deterioration of appearance, deterioration of uniformity of thickness, and deterioration of strength and heat insulation properties. Since known carbonic-acid-gas-foamed polypropylene foamed sheet is only a sheet having a rough surface, it also has a problem on sealability between a covering sheet and the foamed sheet itself when the foamed sheet is processed to a container for foods such as HMR. Attempts of improving the vacuum formability and surface appearance have resulted in foamed products with low expansion ratios.

Known as a method for improving appearance with maintaining a high expansion ratio include techniques wherein a non-foamed layer is formed as a surface either by a method in which a polyolefin foamed layer is formed and a non-foamed sheet or film is laminated thereto with an adhesive or by a method in which a polyolefin foamed layer and a non-foamed sheet or film are laminated by welding.

However, a multilayer foamed sheet using an adhesive can not be used as containers for packing foods because of the residual organic solvents contained in the adhesive used. In the case of welding, even when a sheet for forming a foamed layer having a high expansion ratio is used, its cells are burst so that the expansion ratio decreases, causing problems such as deterioration of heat insulation properties.

US 5,000,992 mentions a coextruded multilayer foamed film for plastic container closures and process for manufacture.

An object of the present invention is to provide a method for producing a multilayer polyolefin foamed sheet having a high expansion ratio which contains no residual solvent, causes no burst of cells, has great surface smoothness and is excellent in secondary formability such as vacuum formability.

Another object of the present invention is to provide a multilayer polyolefin foamed sheet which has great surface smoothness and great secondary formability such as vacuum formability.

Still another object of the present invention is to provide a producing apparatus suitable for the producing method mentioned above or to an apparatus suitable for producing the above-mentioned multilayer polyolefin foamed sheet.

Incidentally, containers for foods are prepared by putting the contents in a container body using foam and then closing the opening of the container body with a covering member. When the surface of the container body is rough, the adhesiveness between the covering member and the container body must be poor and sealability becomes insufficient. As a result, the contents change in quality and deteriorate. When the force for pressing the periphery of the opening of the container body against the covering member in order to increase the adhesiveness, there arise problems of lowering of yield which causes difficulty in actual production since a container body is broken or the covering member becomes difficult to be peeled because of too great adhesiveness between them.

Further object of the present invention therefore is to provide a foamed container body and a foamed container which exhibit great adhesiveness during adhesion of a covering member to the container body.

SUMMARY OF THE INVENTION

The present invention provides:

I. A method for producing a multilayer polyolefin foamed sheet comprising at least one polyolefin foamed layer and at least one polyolefin non-foamed layer, wherein the method uses a producing apparatus comprising at least one first extruder for extruding a material for forming a polyolefin foamed layer wherein the first extruder is equipped with a foaming agent-supplying device for supplying a foaming agent to a cylinder, at least one second extruder for extruding a material for forming a polyolefin non-foamed layer and at least one circular extrusion die for co-extruding the material for forming a polyolefin foamed layer and the material for forming a polyolefin non-foamed layer therethrough to form the multilayer polyolefin foamed sheet, the method comprising:

a melt kneading step in which, in the first extruder, a resin material for forming a polyolefin foamed layer is melted and the melted resin material for forming a polyolefin foamed layer and a foaming agent supplied from the foaming agent-supplying device are mixed to form the material for forming a polyolefin foamed layer;
a melting step in which the material for forming a polyolefin non-foamed layer is melted in the second extruder; and
a co-extruding step in which the material for forming a polyolefin foamed layer and the material for forming a polyolefin non-foamed layer in their melted states are co-extruded into a cylindrical form into atmospheric pressure through the extrusion die and the extruded material for forming a polyolefin foamed layer is foamed to form the multilayer polyolefin foamed sheet, the method being, henceforth, referred to as the producing method of the present invention wherein the co-extrusion step is conducted under the conditions defined in claim 1.

II. A producing apparatus for producing a multilayer polyolefin foamed sheet comprising at least one polyolefin foamed layer and at least one polyolefin non-foamed layer, the apparatus comprising at least one first extruder for extruding a material for forming a polyolefin foamed layer wherein the first extruder is equipped with a foaming agent-supplying device for supplying a foaming agent to a cylinder, at least one second extruder for extruding a material for forming a polyolefin non-foamed layer and at least one circular extrusion die for co-extruding the material for forming a polyolefin foamed layer and the material for forming a polyolefin non-foamed layer therethrough to form the multilayer polyolefin foamed sheet, wherein the extruding die has a diameter at its die lip, W (mm), which is in the range of not smaller than $(1/10)Q$ (kg/hr) and not greater than $(10/3)Q$ (kg/hr) wherein Q (kg/hr) denotes the amount of the resin to be extruded through the extrusion die, the apparatus being, henceforth, referred to as the apparatus of the present invention;
III. A multilayer polyolefin foamed sheet comprising a foamed layer and a non-foamed layer, wherein the foamed layer is composed of polyolefin and the non-foamed layer is composed of a polypropylene with a long-chain branch or a polyolefin-based adhesive resin with a long-chain branch, the foam sheet being, henceforth, referred to as the foam sheet of the present invention; In this specification, there is no particular difference of meanings between sheet and film as long as there is no specific indications, and those means in general a thin layer body. From this viewpoint, the gas barrier resin sheet will be sometimes referred to a gas barrier resin film.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.
Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integer or step.

BRIEF DESCRIPTION OF THE DRAWINGS

In the drawings:

Fig. 1 is a figure illustrating an example of a producing apparatus to be in the present invention;
Fig. 2 illustrates a sectional form of a circular die suited to be used in the present invention;
Fig. 3 illustrates an example of a producing apparatus having a vacuum chamber;
Fig. 4 illustrates an example wherein a heating device is placed before a vacuum chamber;

Fig. 5 is a schematic view of an example of a producing apparatus suitable for working using a circular die;

Fig. 6 illustrates another embodiment of a producing apparatus suitable for working;

Fig. 7 illustrates still another embodiment of a producing apparatus suitable for working;

Fig. 8 illustrates another embodiment of a producing apparatus suitable for working ;

Fig. 9 illustrates an example of an apparatus for producing a multilayer polyolefin foamed sheet wherein a vacuum chamber is directly jointed to a die;

Fig. 10 illustrates a structural example of an outer and inner cylinders for constituting a vacuum chamber;

Fig. 11 illustrating a structural example of an outer and inner cylinders for constituting a vacuum chamber;

Fig. 12 illustrating a structural example of an outer and inner cylinders for constituting a vacuum chamber;

Fig. 13 illustrates an example of structure and installation of a sealing member;

Fig. 14 illustrates an example of structure of a vacuum chamber and an example of a state where a multilayer polyolefin foamed sheet is produced;

Fig. 15 illustrates an example of a composition in which an extruder for extruding a thermoplastic resin for forming a foamed layer is equipped with a gear pump;

Fig. 16 is a perspective view of an example of the container body;

Fig. 17 is a schematic view of an apparatus for producing a multilayer polyolefin foamed sheet to be used for the production of the container body;

Figs. 18(a) and 18(b) are a schematic longitudinal sectional view illustrating an example of a manner how to process the surface of the inner cylinder 9 to be uneven;

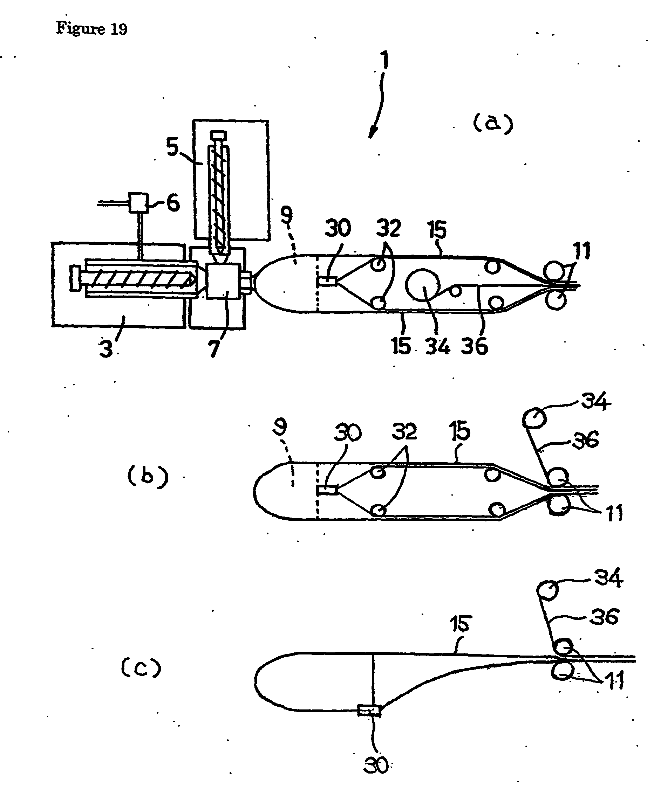

Fig. 19 is a schematic view of an example of a producing apparatus suitable for working. Fig. 19(a) shows that laminating and adhering a gas barrier resin layer into between two multilayer polyolefin foamed sheets having a three-layer structure produces a multilayer polyolefin foamed sheet having a seven-layer structure of non-foamed layer/foamed layer/non-foamed layer/gas barrier resin layer/non-foamed layer/foamed layer/non-foamed layer. Fig. 19(b) shows that laminating and adhering a gas barrier resin layer onto one surface of any of two multilayer polyolefin foamed sheets having a three-layer structure produces a multilayer polyolefin foamed sheet having a seven-layer structure of gas barrier resin layer/non-foamed layer/foamed layer/non-foamed layer/non-foamed layer/foamed layer/non-foamed layer. Fig. 19(c) shows that laminating and adhering a gas barrier resin layer onto one surface of a multilayer polyolefin foamed sheets having a three-layer structure produces a multilayer polyolefin foamed sheet having a four-layer structure of gas barrier resin layer/non-foamed layer/foamed layer/non-foamed layer.

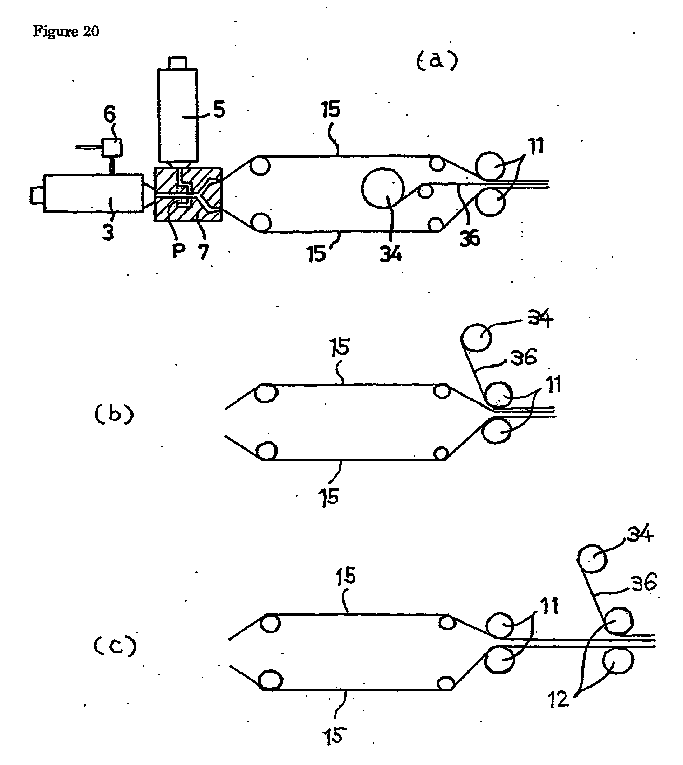

Fig. 20 illustrates another embodiment of a producing apparatus suitable for working. Fig. 20(a) shows that laminating and adhering a gas barrier resin layer into between two multilayer polyolefin foamed sheets having a two-layer structure produces a multilayer polyolefin foamed sheet having a five-layer structure of non-foamed layer/foamed layer/gas barrier resin layer/foamed layer/non-foamed layer. Figs. 20(b) and (c) show that laminating and adhering a gas barrier resin layer onto one surface of any of two multilayer polyolefin foamed sheets having a two-layer structure produces a multilayer polyolefin foamed sheet having a five-layer structure of gas barrier resin layer/non-foamed layer/foamed layer/foamed layer/non-foamed layer.;

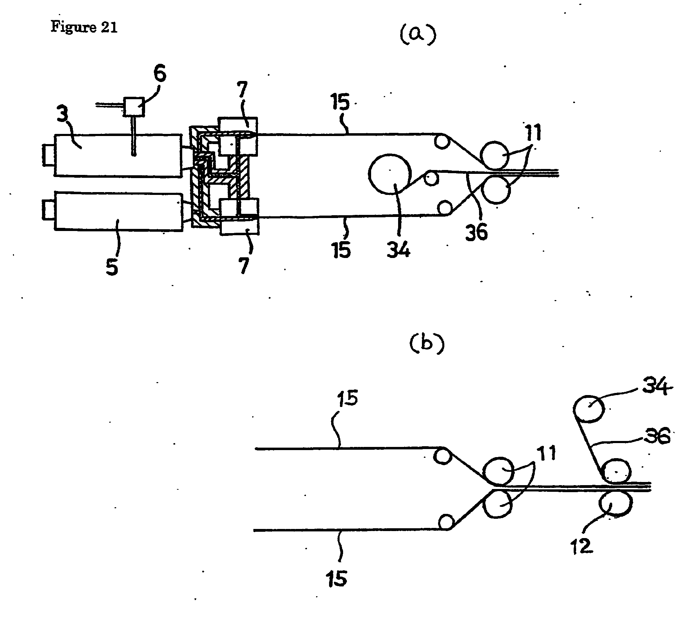

Fig. 21 illustrates still another embodiment of a producing apparatus suitable for working. Fig. 21(a) shows that laminating and adhering a gas barrier resin layer into between two multilayer polyolefin foamed sheets having a two-layer structure produces a multilayer polyolefin foamed sheet having a five-layer structure of non-foamed layer/foamed layer/gas barrier resin layer/foamed layer/non-foamed layer. Fig. 21(b) shows that laminating and adhering a gas barrier resin layer onto one surface of any of two multilayer polyolefin foamed sheets having a two-layer structure produces a multilayer polyolefin foamed sheet having a five-layer structure of gas barrier resin layer/non-foamed layer/foamed layer/foamed layer/non-foamed layer.; and

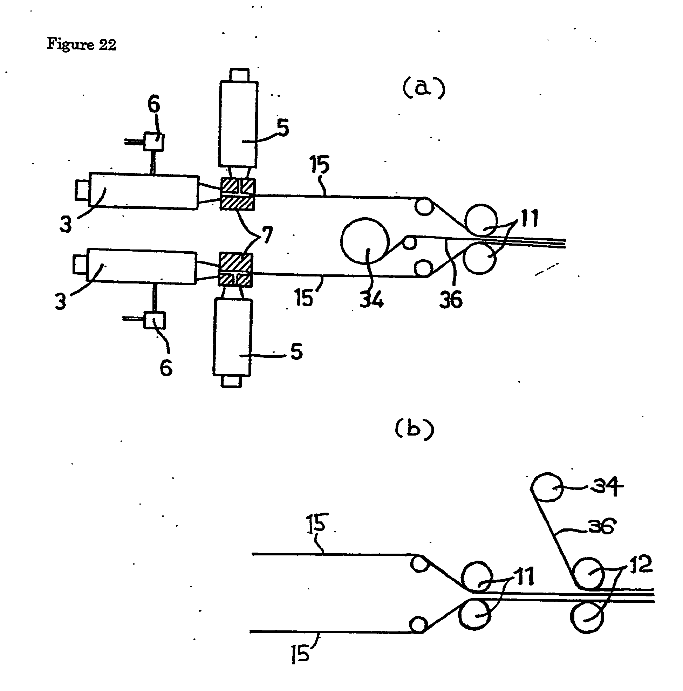

Fig. 22 illustrates further still another embodiment of a producing apparatus suitable for working. Fig. 22(a) shows that laminating and adhering a gas barrier resin layer into between two multilayer polyolefin foamed sheets having a two-layer structure produces a multilayer polyolefin foamed sheet having a five-layer structure of non-foamed layer/foamed layer/gas barrier resin layer/foamed layer/non-foamed layer. Fig. 22(b) shows that laminating and adhering a gas barrier resin layer onto one surface of any of two multilayer polyolefin foamed sheets having a two-layer structure produces a multilayer polyolefin foamed sheet having a five-layer structure of gas barrier resin layer/non-foamed layer/foamed layer/foamed layer/non-foamed layer ;

## DESCRIPTION OF THE PREFERRED EMBODIMENTS

The polyolefin non-foamed layer is formed integrally on at least one surface of the polyolefin foamed layer by the producing method of the present invention, and the multilayer polyolefin foamed sheet to be obtained, therefore, is excellent in vacuum formability.

Plural kinds of resin materials are laminated and extruded in their melted states in the co-extruding step. A retention time of the resin materials in the die after lamination is preferably from 0.1 to 20 seconds, more preferably from 0.5 to 15 seconds.

The above-mentioned multilayer polyolefin foamed sheet preferably has a structure of non-foamed layer/foamed layer/non-foamed layer, that is, a structure in which the polyolefin non-foamed layers are on the both surfaces of the polyolefin foamed layer. This can improve the smoothness of the both surfaces of the foamed sheet and the foamed sheet can be vacuum-formed with good formability whichever surface thereof is vacuumed.

In the present invention, co-extrusion means that the material for forming a polyolefin foamed layer and the material for forming a polyolefin non-foamed layer are laminated to weld together and then are extruded before the material for foming the polyolefin foamed layer is foamed.

As the material for forming a polyolefin non-foamed layer in the multilayer polyolefin foamed sheet of the present invention, a polypropylene with a long-chain branch or a polyolefin-based adhesive resin with a long-chain branch is preferably used. These polyolefin-based resins preferably have a branching index, [A], satisfying $0.20 \leq [A] \leq 0.98$. The branching index is more preferably in the range of $0.30 \leq [A] \leq 0.90$, still more preferably in the range of $0.40 \leq [A] \leq 0.80$.

The polyolefin-based resins with a long-chain branch having a branching index, [A], satisfying $0.20 \leq [A] \leq 0.98$ has great strength in its melted state. Therefore, providing a non-foamed resin layer comprising this polyolefin-based resins to form a surface of the multilayer polyolefin foamed sheet shows the effect of preventing the generation of either irregularities caused by cells formed by a foaming agent in the internal foamed layer or those resulting from bursts of cells. As a result, a multilayer polyolefin foamed sheet with a high expansion ratio having high surface smoothness and being excellent in secondary formability such as vacuum formability is obtained.

The branching index expresses the degree of long-chain branching and is a value defined by the following expression:

$$\text{Branching index } [A] = [\eta]Br/[\eta]Lin$$

In the expression, $[\eta]Br$ is the intrinsic viscosity of a branched polypropylene and $[\eta]Lin$ is the intrinsic viscosity of a semicrystalline linear polypropylene, which is mainly isotactic, having a weight average molecular weight substantially equal to that of the branched polypropylene.

An intrinsic viscosity is also known as a limiting viscosity number and is a measure of the ability of a polymer molecule to increase a viscosity of a solution in its general meaning. The intrinsic viscosity depends on the size and the shape of the polymer molecule to be dissolved. Therefore, in comparison of a non-linear polymer and a linear polymer having a weight average molecular weight equal to that of the non-linear polymer, the intrinsic viscosity is a value indicating the configuration of the non-linear polymer molecule. That is, the foregoing ratio of the intrinsic viscosities is the measure of the degree of branching of the non-linear polymer and is defined as a branching index. A method for measuring the intrinsic viscosities of the polypropylene with a long-chain branch and the polyolefin-based adhesive resin with a long-chain branch is disclosed in J. App. Poly. Sci., 14, 2947-2963 (1970), Elliot et al. In this specification, all intrinsic viscosities are obtained from the measurements on samples dissolved in tetralin or orthodichlorobenzene at 135°C.

The weight average molecular weight (Mw) can be measured by various methods. Methods preferably used are the GPC method and the method which was published by M. L. McConnel in American Laboratory, May, 63-75 (1978), that is, the low-angle laser light scattering photometry.

The producing apparatus used in the producing method may preferably have a gear pump mounted between the at least one extruder and the extruding die.

When the gear pump is placed, the uniformity of the extruding rate of the resin is improved and the variation in thickness of the polyolefin foamed sheet is reduced. In particular, since the variation in thickness of the resin at its extrusion is amplified by foaming, it is effective and preferable that the gear pump is provided to the extruder for extruding the foamable resin in order to improve the uniformity of the thickness of the sheet.

In the producing method of the present invention, an embodiment is preferable in which a circular die is used as the extrusion die and the material for forming a polyolefin foamed layer and that for forming a polyolefin non-foamed layer are co-extruded into a cylindrical form in the co-extruding step.

In this embodiment, a multilayer polyolefin foamed sheet which is entirely uniform and has a high expansion ratio can be produced and a wide multilayer polyolefin foamed sheet can be produced.by use of a die with a relatively small diameter.

The co-extruding step is preferably carried out under conditions satisfying the following expression

$$10 \geq Q \text{ (kg/hr)/W (mm)} \geq 0.3$$

wherein "Q (kg/hr)" indicates the amount of the resin to be extruded through the extrusion die and "W (mm)" indicates the die lip diameter. More preferably, Q (kg/hr)/W (mm) is equal to or more than 0.5.

When Q (kg/hr)/W (mm) is less than 0.3, coarsening of cells and poor appearance such as stripes may occur. When it exceeds 10, there may arise a problem of increase in equipment costs.

The producing method of the present invention preferably has an extending step for extending the co-extruded multilayer polyolefin foamed sheet in the direction perpendicular to the extruding direction by means of an extending device, wherein the extending step is conducted after the co-extruding step.

By doing the extending step, a thin sheet, which is difficult to be produced by only mere extrusion, can be easily produced. Furthermore, since the extension is carried out after extrusion, a wide multilayer polyolefin foamed sheet can be produced by the use of an extruder with a small diameter.

The extending device is preferably a mandrel.

When the mandrel is used, the multilayer polyolefin foamed sheet which has been extruded in a cylindrical form by using a circular die can be easily, simply and uniformly extended.

As an examples, when a flat die such as a T-die is used as the extrusion die, a tenter such as a clip tenter and a pin tenter is preferably used as the extending device.

An extending ratio in the extending step is preferably from 1.5 to 4.5 times.

A preferred embodiment of the producing method of the present invention has a laminating step for laminating at least one multilayer polyolefin foamed sheet produced.

When the laminating step is provided, at least two foamed layers separated by an intermediate layer which is a non-foamed layer are formed and multilayer polyolefin foamed sheets having at least a structure of non-foamed layer/ foamed layer/ non-foamed layer/foamed layer, preferably having a structure of non-foamed layer/foamed layer/non-foamed layer/non-foamed layer/foamed layer/non-foamed layer can be produced continuously. Such laminated multilayer polyolefin foamed sheets are extremely excellent in vacuum formability.

The laminating step is preferably a step in which the multilayer polyolefin foamed sheet co-extruded is folded up, superimposed and laminated together by, for example, using a pressing roller. In the case of the multilayer polyolefin foamed sheet co-extruded in a cylindrical form, it is preferably laminated as it is or superimposed and laminated after being incised continuously along its longitudinal direction at at least one point.

The producing method may further have a pressure reducing step in which the multilayer polyolefin foamed sheet extruded is passed through a vacuum chamber to increase the expansion ratio of the foamed layer.

By doing the pressure reducing step, a multilayer polyolefin foamed sheet having a foamed layer with a high expansion ratio and also having a smooth surface and having a good appearance can be obtained.

The producing method may have a preheating step for preheating the extruded multilayer polyolefin foamed sheet, wherein the preheating step is conducted before at least one of the laminating step and the pressure reducing step. By doing the preheating step, a multilayer polyolefin foamed sheet having a higher expansion ratio can be obtained.

In the present invention, a haul-off device for taking up the foamed sheet is further provided. It is preferable that a rate of taking.up the foamed sheet is equal to or more than 1.2 time a linear velocity of the foamed sheet. Such a construction can also result in the effect of increasing the expansion ratio.

The producing method 2 can provide a method for producing a multilayer polyolefin foamed sheet comprising a foamed layer and a gas barrier resin layer wherein when the sheet is vacuum-formed, the gas barrier resin layer does not become extremely thin or is not broken and which requires a simple procedure and can reduce the production cost. Since a gas barrier resin sheet produced independently is used as the gas barrier resin layer, an optional gas barrier resin sheet can be used which has an adjusted thickness and an adjusted accuracy in thickness. For example, a thickness distribution, Tmax/Tmin, measured in an area of at least 25 cm$^2$ may be adjusted in the range of from 1.0 to 1.2 and the thickness T may be adjusted in the range of from 10 to 300 $\mu$m. This method does not specially require an adhering step and, therefore, needs only simple steps. Tmax and Tmin denote the maximum and minimum values of the thickness, respectively. It is preferable that the Tmax/Tmin in a measuring area of 25 cm$^2$ or more is in the range of from 1.0 to 1.2 because the uniformity is high.

More preferred is to adjust the multilayer polyolefin foamed sheet to have a thickness distribution, Tmax/Tmin, ranging from 1.0 to 1.2 and/or to have a thickness, T, ranging from 10 to 150 $\mu$m in a measuring range of 25 cm$^2$ or more.

Examples of the simple fundamental compositions of the multilayer polyolefin foamed sheet obtained in the producing method include structures comprising three layers such as gas barrier resin layer/non-foamed layer/foamed layer and non-foamed layer/foamed layer/gas barrier resin layer, preferably structures comprising four layers such as gas barrier resin layer/non-foamed layer/foamed layer/non-foamed layer, structures comprising five layers such as non-foamed layer/foamed layer/gas barrier resin layer/foamed layer/non-foamed layer, or structures comprising seven layers such as gas barrier resin layer/non-foamed layer/foamed layer/non-foamed layer/non-foamed layer/foamed layer/non-foamed layer or non-foamed layer/foamed layer/non-foamed layer/gas barrier resin layer/non-foamed layer/foamed layer/non-foamed layer. Layers may be further laminated so that structures having more layers than those the above-mentioned structures are formed.

Examples of the producing method described above includes the following ones, which are shown in Figures 19 to 22.

(a) A method for producing a multilayer polyolefin foamed sheet, wherein one first extruder and one second extruder are provided and the extrusion die is a circular die, wherein the material for forming a polyolefin foamed layer and the material for forming a polyolefin non-foamed layer are co-extruded into a cylindrical form to form the multilayer polyolefin foamed sheet in the co-extruding step, the method further comprising an incising step for incising the cylindrical multilayer polyolefin foamed sheet along its longitudinal direction at two points to form two multilayer polyolefin foamed sheets, wherein the gas barrier resin sheet is supplied to between the two multilayer polyolefin foamed sheets, which are thereafter laminated to the both surfaces of the gas barrier resin sheet to form the gas barrier resin layer in the laminating step.

By this method, a multilayer polyolefin foamed sheet having a structure of non-foamed layer/foamed layer/non-foamed layer/gas barrier resin layer/non-foamed layer/foamed layer/non-foamed layer can be easily produced, for example.

The above example is shown in Figure 19(a).

(b) A method for producing a multilayer polyolefin foamed sheet comprising a laminating step in which the gas barrier resin sheet is supplied onto at least one surface of the two multilayer polyolefin foamed sheets so as to form an outermost layer and the gas barrier resin sheet and the two multilayer polyolefin foamed sheets are laminated together to form the gas barrier resin layer in place of the laminating step of the preceding embodiment (a).

By this method, a multilayer polyolefin foamed sheet having a composition of gas barrier resin layer/non-foamed layer/foamed layer/non-foamed layer/non-foamed layer/foamed layer/non-foamed layer can be easily produced, for example.

The above example is shown in Figure 19(b).

(c) A method for producing a multilayer polyolefin foamed sheet comprising an incising step for incising the cylindrical multilayer polyolefin foamed sheet along its longitudinal direction at one point in place of the incising step of the foregoing embodiment (a), wherein the gas barrier resin layer is supplied onto at least one surface of the two multilayer polyolefin foamed sheets so as to form an outermost layer and the gas barrier resin sheet and the two multilayer polyolefin foamed sheets are laminated together to form the gas barrier resin layer in place of the foregoing laminating step.

By this method, a multilayer polyolefin foamed sheet having a composition of gas barrier resin layer/non-foamed layer/foamed layer/non-foamed layer can be easily produced, for example.

The above example is shown in Figure 19(c).

(d) A method for producing a multilayer polyolefin foamed sheet, wherein one first extruder and one second extruder are provided and the extrusion die is one flat die which has two extrusion openings parallel to each other, wherein the material for forming a polyolefin foamed layer and the material for forming a polyolefin non-foamed layer are supplied to the extrusion openings of the extrusion die to be co-extruded to form two multilayer polyolefin foamed sheets in the co-extruding step, wherein the gas barrier resin sheet is supplied to between the two multilayer polyolefin foamed sheets and laminated therewith to form the gas barrier resin layer in the laminating step.

The above example is shown in Figure 20(a).

(e) A method for producing a multilayer polyolefin foamed sheet, comprising, in place of the laminating step of the preceding embodiment (d), a laminating step in which the gas barrier resin sheet is supplied onto at least one surface of the two multilayer polyolefin foamed sheets so as to form an outermost layer and the gas barrier resin sheet and the two multilayer polyolefin foamed sheets are laminated together to form the gas barrier resin layer.

The above example is shown in Figures 20(b) or (c).

(f) A method for producing a multilayer polyolefin foamed sheet, wherein one first extruder and one second extruder are provided and two flat dies, each of which has a parallel extrusion opening, are provided as the extrusion die, wherein the material for forming a polyolefin foamed layer and the material for forming a polyolefin non-foamed layer are respectively supplied to the extrusion openings of the two dies and co-extruded to form two multilayer polyolefin foamed sheets in the co-extruding step, wherein the gas barrier resin sheet is supplied to between the two multilayer polyolefin foamed sheets and laminated together to form the gas barrier resin layer in the laminating step.

The above example is shown in Figure 21(a).

(g) A method for producing a multilayer polyolefin foamed sheet, wherein the gas barrier resin sheet is supplied onto at least one surface of the two multilayer polyolefin foamed sheets so as to form an outermost layer and the gas barrier resin sheet and the two multilayer polyolefin foamed sheets are laminated together to form the gas barrier resin layer in place of conducting the laminating step of the preceding embodiment (f).

By the foregoing two methods, multilayer polyolefin foamed sheets having a structure of non-foamed layer/foamed layer/gas barrier resin layer/foamed layer/non-foamed layer and having that of gas barrier resin layer/non-foamed layer/foamed layer/foamed layer/non-foamed layer can be easily produced, for example.

The above example is shown in Figure 21(b).

(h) A method for producing a multilayer polyolefin foamed sheet, wherein two first extruders and two second extruders are provided, wherein two flat dies, each of which has one extrusion opening, or two circular dies are provided as the extrusion die, wherein the method uses two sets of producing apparatus comprising one first extruder, one second extruder and one extrusion die, wherein the material for forming a polyolefin foamed layer and the material for forming the polyolefin non-foamed layer are supplied to the two sets of manufacturing apparatus and co-extruded to form two multilayer polyolefin foamed sheets in the co-extruding step, wherein the gas barrier resin sheet is supplied to between the two multilayer polyolefin foamed sheets and laminated together to form the gas barrier resin layer in the laminating step.

The above example is shown in Figure 22(a).

(i) A method for producing a multilayer polyolefin foamed sheet, wherein the gas barrier resin sheet is supplied onto at least one surface of the two multilayer polyolefin foamed sheets so as to form an outermost layer and the gas barrier resin sheet and the two multilayer polyolefin foamed sheets are laminated together to form the gas barrier resin layer in place of conducting the laminating step of the preceding embodiment (h).

This method is problematic in that the number of the extruders to be used is great, but a wide variety of multilayer polyolefin foamed sheets can be obtained depending on their purposes.

The above example is shown in Figure 22(b).

The above-described producing methods may have a further pressure reducing step for passing the extruded multilayer polyolefin foamed sheet through a vacuum chamber to increase the expansion ratio of the foamed layer. Such a method has the advantage of being able to easily adjust the expansion ratio of the foamed layer high.

Another preferred embodiment further comprises a preheating step for preheating the extruded multilayer polyolefin foamed sheet, wherein the preheating step is conducted before at least one of the laminating step and the pressure reducing step. This is effective to adjust the expansion ratio and to secure the adhesive strength between the layers.

As described above, the producing method 2 relates to a method for producing a multilayer polyolefin foamed sheet having a gas barrier resin layer, and specifically to a method for producing a container which is required to have gas barrier properties, heat insulation properties, light weight and the like, such as containers for foods, or a multilayer polyolefin foamed sheet which is suitable for producing such a container.

As a method for producing a conventional foamed sheet having a gas barrier resin layer, the following techniques are heretofore known, for example:

(1) A method in which a foamed sheet and a gas barrier resin layer are laminated together by means of an adhesive.
(2) A method in which a material for forming a foamed sheet and a material for forming a gas barrier resin layer are co-extruded through a single extrusion die using separate extruders.

However, the technique (1) is problematic in that the lamination using an adhesive requires an adhering step including a step for applying an adhesive in addition to a step for producing a polyolefin foamed sheet, resulting in a high production cost and in that the organic solvent contained in the adhesive remains in the product and when the product is used as containers for foods, the solvent elutes into the foods. The technique (2) requires no adhering step and has no organic solvent-retention problem or the like. However, since in this technique, the foamed sheet is formed through the co-extrusion of the gas barrier resin layer with another layer, the thickness of the gas barrier resin layer is difficult to be adjusted and, therefore, the thickness of the barrier resin layer varies greatly. Thus, this technique is problematic in that when the resulting multilayer polyolefin foamed sheet is vacuum-formed to provide a container for foods or the like, regions appear in which the gas barrier resin layer is extremely thin or the gas barrier resin layer is broken and there, therefore, is no gas barrier resin layer, sometimes resulting in deterioration in the qualities of foods during their storage.

Furthermore, the co-extrusion technique has a problem in that the gas barrier resin layer is also foamed so that the gas barrier property may not be shown satisfactorily. Producing method 2 overcomes these problems, and specifically provides a method for producing a multilayer polyolefin foamed sheet comprising a foam layer and a gas barrier resin layer wherein when the foamed sheet is vacuum-formed, the gas barrier resin layer does not become extremely thin or is not broken, the process having simple steps and being capable of reducing the production cost.

The producing apparatus 2 is characterized by comprising:

at least one extruder equipped with a foaming agent-supplying device for supplying a foaming agent, wherein in the extruder, a resin material for forming a polyolefin foamed layer is melted and the melted resin material for forming a polyolefin foamed layer and the foaming agent are mixed to form a material for forming a polyolefin foamed layer, a circular die mounted to the extruder, through which the material for forming a polyolefin foamed layer is extruded into a cylindrical form, and

a vacuum chamber for converting the material for forming a polyolefin foamed layer into foam, wherein the vacuum chamber is jointed to the circular die and comprises an inner cylinder and an outer cylinder covering the inner cylinder.

When a producing apparatus of such a structure is used, since the material for forming a polyolefin foamed layer is put into vacuum right after the extrusion, it is not cooled once and is foamed with its whole body heated uniformly. A uniformly foamed foam having a high expansion ratio therefore can be produced. Moreover, since there is no need to provide any other heating means, the facilities are inexpensive and there is an energy advantage.

The use of the circular die permits wide sheets to be produced in a relatively narrow space and also permits polyolefin foamed sheets to be produced with high uniformity.

In the producing apparatus described above, it is preferable that the circular die is further equipped with at least one extruder for extruding the material for forming a polyolefin non-foamed layer and the circular die is a multilayer forming circular die which can produce a multilayer polyolefin foamed sheet comprising at least one polyolefin foamed layer and at least one polyolefin non-foamed layer by co-extruding the material for forming a polyolefin foamed layer and the material for forming a polyolefin non-foamed layer in their molten state.

When the non-foamed layer is formed as a surface layer, a polyolefin foamed sheet with excellent surface smoothness can be produced and also the vacuum formability of the polyolefin foamed sheet is improved. The co-extrusion permits the foamed layer and the non-foamed layer to be adhered and laminated without using an adhesive.

When the circular die is used, the polyolefin foamed sheets are produced in a cylindrical form. Therefore, entirely uniform polyolefin foamed sheets with high expansion ratios can be produced. Moreover, wide polyolefin foamed sheets can be produced even when a die having a relatively small caliber is used. In addition, since the polyolefin foamed sheet is small in diameter right after the extrusion, a vacuum chamber with a relatively simple structure can be constructed.

In the producing apparatus described above, the inner cylinder is preferably a mandrel which is able to enlarge the diameter of the cylindrical sheet extruded.

Such an apparatus is simple and a polyolefin foamed sheet according to the thickness and width required can be produced by varying the shape of the mandrel.

The mandrel is formed so that it has, in its part near the resin outlet of the circular die, an outer diameter similar to the diameter of the cylindrical sheet extruded, its diameter increases toward the downstream of the flow of the polyolefin foamed sheet and it has, at its optional position by the end of the vacuum chamber, a predetermined diameter according to the size of the polyolefin foamed sheet to be produced.

The mandrel may be also formed so that it has, in its part near the resin outlet of the extruder, an outer diameter similar to the diameter of the intended polyolefin formed sheet, its diameter maintains toward the downstream of the flow of the polyolefin foamed sheet or it has, in its part near the resin outlet of the extruder, an outer diameter 1 to 10 % greater than the diameter of the intended formed sheet, its diameter has a predetermined diameter according to the size of the polyolefin foamed sheet to be produced toward the downstream of the flow of the foamed sheet

The producing apparatus described above is one wherein a sealing member for sealing the vacuum chamber is provided on at least one of the outer periphery of the inner cylinder and the inner periphery of the outer cylinder.

The polyolefin foamed sheet is produced continuously and is passed through the space between the outer periphery of the inner cylinder and the inner periphery of the outer cylinder to be sent out to the outside of the apparatus. Therefore, when the space is sealed with only the polyolefin foamed sheet, which is a product, the space must have a width such that the polyolefin sheet after foaming can pass therethrough without resistance. When the space is too wide, a pressure reducing means with a large displacement must be provided for maintaining the vacuum degree in the vacuum chamber with stability and the apparatus becomes expensive. When the aforementioned construction is adopted, sealing for producing a vacuum in the vacuum chamber can be conducted effectively and at the same time the polyolefin foamed sheet after foaming can be pass therethrough easily. The sealing member is preferably provided in the outlet side of the vacuum chamber, that is, the downstream of the flow of the polyolefin foamed sheet.

In a preferred embodiment, at least one of the inner cylinder and the outer cylinder has a temperature adjusting means. As the temperature adjusting means, a cooling device or a heating device is selected appropriately depending on properties of the resin, properties, such as a thickness and an expansion ratio, of the polyolefin foamed sheet to be produced. Using, as demanded, the cooling device and the heating device together is also a preferred embodiment.

Such a construction permits a foaming state to be controlled to be a good one depending on the demanded characteristic. The temperature adjusting means is preferably provided to both the inner cylinder and the outer cylinder. The temperature adjusting means may be, for example, one in which a heating medium or a cooling medium is passed through the space formed in the inner cylinder or the outer cylinder and one in which a hot air or a cold air is blown on the inner cylinder or the outer cylinder from their outside, but is not limited these ones.

It is preferable that on at least one of the outer peripheral surface of the inner cylinder and the surface of the outer cylinder facing the material for forming a polyolefin foamed layer are formed many fine irregularities because a contact area of the wall of the vacuum chamber and the polyolefin foamed sheet decreases so that the frictional resistance is reduced which is caused when the polyolefin foamed sheet passes through the vacuum chamber with contacting the wall thereof. The fine irregularity is one by which the polyolefin foamed sheet after foaming is applied small resistance when it passes thereon. Examples of the fine irregularities include grain formed by etching, irregularities formed by sand blasting, shot blasting or the like, and thin grooves formed by engraving.

The producing apparatus described above may have a gear pump mounted between the at least one extruder and the circular die.

When the gear pump is placed, the uniformity of the extruding rate of the resin is improved and the variation in thickness of the polyolefin foamed sheet is reduced. In particular, since the variation in thickness of the resin at its extrusion is amplified by foaming, it is effective and preferable that the gear pump is provided to the extruder for extruding the foamable resin in order to improve the uniformity of the thickness of the sheet.

In the producing apparatus of the present invention, a haul-off device for winding up the polyolefin foamed sheet and, as needed, at least one incising device for incising the cylindrical foamed sheet, a compression-bonding device for compression-bonding the cylindrical foamed sheet into a bi-layered laminate sheet, or the like.

The producing method may have a melt kneading step for melting the material for forming a polyolefin foamed layer and mixing the melted material for forming a polyolefin foamed layer with a foaming agent to form the material for polyolefin foamed layer, an extruding step for extruding the material for forming a polyolefin foamed layer through a circular die into a cylindrical form, and pressure reducing step for converting the extruded cylindrical sheet material for forming a polyolefin foamed layer into a foam in a vacuum chamber which is jointed to the circular die.

In the above-mentioned method, it is preferable that the polyolefin foamed sheet is a multilayer polyolefin foamed sheet having at least one foamed layer and at least one non-foamed layer comprising the material for forming a polyolefin non-foamed layer and that the extruding step is a co-extruding step for co-extruding the material for forming a polyolefin foamed layer and the material for forming the polyolefin non-famed layer in their melted states to form a cylindrical multilayer sheet.

The above-mentioned method preferably uses the producing apparatus described above.

Since the material for forming a polyolefin foamed layer is brought into a vacuum state right after the extrusion, it is not cooled once and is foamed with its whole body heated uniformly. Therefore, a uniformly foamed foam having a high expansion ratio can be produced. Furthermore, since there is no need to provide any other heating means. The facilities are inexpensive and there is an energy advantage. Thus, polyolefin foamed sheets can be obtained at low cost.

As described above, the present invention comprises a method for producing a multilayer polyolefin foamed sheet, particularly a foamed sheet with a high expansion ratio, and an apparatus for producing the multilayer polyolefin foamed sheet.

Heretofore, an apparatus for producing a thermoplastic foam with a high expansion ratio by using a foaming agent which does not cause any environmental problems such as carbonic acid gas is known in Japanese Patent Laid-Open No. Hei 11-240063.

In the known technique, a melted mixture prepared by blending a foaming agent to a thermoplastic resin is extruded into the air once to form a primary foam. When the primary foam is a flat sheet, it is converted directly into a secondary foam by being foamed in a vacuum chamber. When it is cylindrical sheet, it is converted into the second foam after being incised to a flat sheet.

This technique, however, has the following problems, for example.

(1) Since it has the step in which the melted mixture is formed into the primary foam under atmospheric pressure, the temperature of the resin, particularly that of the surface of the resin, drops during the step and only limited expansion ratios can be established by the secondary foaming in the vacuum chamber. No foam with a high expansion ratio therefore can be obtained. The attempt to increase the expansion ratio requires a special heating means, which increases the facility cost and results in energy disadvantage.

(2) The vacuum chamber has a configuration which is applicable only to a flat sheet. Therefore, the attempt to produce a wide sheet requires a large apparatus, which liable to cause difference in foaming states between the edges and the center of the sheet.

The object of the present invention described above is to overcome these problems, and concretely to provide both an apparatus for producing a polyolefin foamed sheet with a high expansion ratio and with high uniformity in the foaming state throughout the sheet and a method for producing a polyolefin foamed sheet.

The foamed sheet of the present invention is characterized by having a foamed layer and a non-foamed layer wherein the foamed layer is composed of a polyolefin and the non-foamed layer is composed of a polypropylene with a long-chain branch or a polyolefin-based adhesive resin with a long-chain branch.

The foamed sheet of the present invention provides a development of multilayer polyolefin foamed sheets with excellent vacuum formability to be produced. Furthermore, in the case where the polyolefin-based adhesive resin is used for the non-foamed layer, when the non-foamed layer is heated, multilayer polyolefin foamed sheets can be laminated across the layer to form a polyolefin foamed sheet having more layers than the multilayer polyolefin foamed sheets. It becomes also possible to laminate and seal the multilayer polyolefin foamed sheet with another film or sheet material.

The polyolefin-based adhesive resin with a long-chain branch is a resin with a branched long chain having a functional group such as a carboxyl group and a hydroxyl group. Since this resin has a high polarity, it becomes excellent in adhesiveness with the polyolefin-based adhesive resin and with other materials such as a hot melt adhesive and a film substrate.

The polyolefin forming the non-foamed layer preferably has a branching index, [A], satisfying $0.20 \leq [A] \leq 0.98$. The branching index is more preferably in the range of $0.30 s [A] \leq 0.90$ and still more preferably of $0.40 \leq [A] \leq 0.80$.

The polyolefin-based resins with a long-chain branch having a branching index, [A], satisfying $0.20 \leq [A] s 0.98$ has great strength in its melted state. Therefore, providing a non-foamed resin layer comprising such a resin to form a surface of the multilayer polyolefin foamed sheet shows the effect of preventing the generation of either irregularities caused by cells formed by a foaming agent in the internal foamed layer or those resulting from bursts of cells. As a result, a multilayer polyolefin foamed sheet with a high expansion ratio having high surface smoothness and being excellent in secondary formability such as vacuum formability is obtained.

The branching index expresses the degree of long-chain branching and is a value defined by the following expression:

$$\text{Branching index } [A] = [\eta]\text{Br}/[\eta]\text{Lin}$$

In the expression, [η]Br is the intrinsic viscosity of a branched polypropylene and [η]Lin is the intrinsic viscosity of a semicrystalline linear polypropylene, which is mainly isotactic, having a weight average molecular weight substantially equal to that of the branched polypropylene.

An intrinsic viscosity is also known as a limiting viscosity number and is a measure of the ability of a polymer molecule to increase a viscosity of a solution in its general meaning. The intrinsic viscosity depends on the size and the shape of the polymer molecule to be dissolved. Therefore, in comparison of a non-linear polymer and a linear polymer having a weight average molecular weight equal to that of the non-linear polymer, the intrinsic viscosity is a value indicating the configuration of the non-linear polymer molecule. That is, the foregoing ratio of the intrinsic viscosities is the measure of the degree of branching of the non-linear polymer and is defined as a branching index. A method for measuring the intrinsic viscosities of the polyolefin-based adhesive resin with a long-chain branch is disclosed in J. Appl. Poly. Sci., 14, 2947-2963 (1970), Elliot et al. In this specification, all intrinsic viscosities are obtained from the measurements on samples dissolved in tetralin or orthodichlorobenzene at 135°C.

The weight average molecular weight (Mw) can be measured by various methods. Methods preferably used are the GPC method and the method which was published by M. L. McConnel in American Laboratory, May, 63-75 (1978), that is, the low-angle laser light scattering photometry.

Although it is sufficient for a multilayer polyolefin foamed sheet with great smoothness to have at least one foamed layer and at least one non-foamed layer, the sheet preferably has two non-foamed layers and has a three-layer structure of non-foamed layer/foamed layer/non-foamed layer. In the sheet having such a structure, the both surfaces are formed of the non-foamed layers and have excellent smoothness; the sheet is excellent in vacuum formability.

The foamed sheet of the present invention preferably has three non-foamed layers described above.

When a non-foamed layer is placed between foamed layers, the multilayer polyolefin foamed sheet is improved in vacuum formability.

The non-foamed layer is a layer having an expansion ratio of not less than 1.0 time and not greater than 1.5 time, preferably not less than 1.0 time and not greater than 1.1 time. The foamed layer is a layer having an expansion ratio of greater than 1.5 time, preferably from 2.5 times to 40 times. Expansion ratios of less than 2.5 times may result in foams insufficient in properties such as light weight and heat insulation properties. When the expansion ratio exceeds 40 times, it may become difficult for a foamed sheet to be produced and cells will not be able to be prevented from bursting during vacuum forming. The expansion ratio can be adjusted, for example, by selecting the amount of the foaming agent to use and by conducting vacuum processing after forming the foamed sheet.

The aforementioned foamed layer preferably is a polypropylene foam.

When both the non-foamed layer and the foamed layer are composed of polypropylene, the adhesion between these layers is enhanced and therefore no delamination occurs even if vacuum forming is carried out. Thus, a stable multilayer polyolefin foamed sheet can be produced.

The polypropylene for the non-foamed layer and that for the foamed layer may be either the same or different.

Of course, the multilayer polyolefin foamed sheet may be one in which a gas barrier resin sheet is laminated which has at least one gas barrier resin layer.

The foamed sheet 2 is a multilayer polyolefin foamed sheet comprising a foamed sheet having at least one polyolefin foamed layer and a gas barrier resin sheet having at least one gas barrier resin layer laminated thereon, wherein the gas barrier resin sheet has a thickness, T, of from 10 to 300 $\mu$m and has a thickness distribution, Tmax/Tmin, of from 1.0 to 1.2 in an area of at least 25 m$^2$.

The foamed sheet 2 provides a development of a multilayer polyolefin foamed sheet to be produced whose gas barrier resin layer does not become extremely thin or is not broken by vacuum forming and which has a foamed layer and a gas barrier resin layer from which no organic solvent elutes.

In addition, a wider measuring area in which Tmax/Tmin is from 1.0 to 1:2 is preferable as long as it is 25 cm$^2$ or more since as it becomes wider, the uniformity increases.

The multilayer polyolefin foamed sheet preferably has further at least one non-foamed layer of a polyolefin-based resin since the sheet becomes excellent in vacuum formability.

The non-foamed layer is a layer having an expansion ratio of not less than 1.0 time and not greater than 1.5 time, preferably not less than 1.0 time and not greater than 1.1 time. An expansion ratio of the foamed layer is not limited particularly as long as a desired heat insulation property and the like are satisfied. The foamed layer is a layer having an expansion ratio of greater than 1.5 time, preferably from 2.5 times to 40 times. Expansion ratios of less than 2.5 times may result in foams insufficient in properties such as light weight and heat insulation property. When the expansion ratio exceeds 40 times, it may become difficult for a foamed sheet to be produced and cells will not be able to be prevented from bursting during vacuum forming. The expansion ratio can be adjusted, for example, by selecting the amount of the foaming agent to use and by conducting vacuum processing after forming the foamed sheet.

The polyolefin-based resin is, for example, a polypropylene with a long-chain branch or a polyolefin-based adhesive resin with a long-chain branch. These polyolefin-based resins preferably have a branching index, [A], satisfying $0.20 \leq [A] \leq 0.98$ since a multilayer polyolefin foamed sheet excellent in appearance, vacuum formability and the like can be produce. The branching index is more preferably in the range of $0.3 \leq [A] \leq 0.90$, still more preferably in the range of $0.40 \leq [A] \leq 0.80$.

The branching index expresses the degree of long-chain branching and is a value defined by the following expression:

$$\text{Branching index [A]} = [\eta]\text{Br}/[\eta]\text{Lin}$$

In the expression, [η]Br is the intrinsic viscosity of a branched polypropylene and [η]Lin is the intrinsic viscosity of a semicrystalline linear polypropylene, which is mainly isotactic, having a weight average molecular weight substantially equal to that of the branched polypropylene.

An intrinsic viscosity is also known as a limiting viscosity number and is a measure of the ability of a polymer molecule to increase a viscosity of a solution in its general meaning. The intrinsic viscosity depends on the size and the shape of the polymer molecule to be dissolved. Therefore, in comparison of a non-linear polymer and a linear polymer having a weight average molecular weight equal to that of the non-linear polymer, the intrinsic viscosity is a value indicating the configuration of the non-linear polymer molecule. That is, the foregoing ratio of the intrinsic viscosities is the measure of the degree of branching of the non-linear polymer and is defined as a branching index. A method for measuring the intrinsic viscosities of the polypropylene with a long-chain branch and the polyolefin-based adhesive resin with a long-chain branch is disclosed in J. Appl. Polym. Sci., 14, 2947-2963 (1970), Elliot et al. In this specification, all intrinsic viscosities are obtained from the measurements on samples dissolved in tetralin or orthodichlorobenzene at 135°C.

A content of low molecular weight organic compounds having from 3 to 4 carbon atoms in the foamed sheet of the present invention is preferably not greater than 10000 ppm, more preferably not greater than 1000 ppm and still more preferably not greater than 100 ppm because no safety problem arises when the foamed sheet is used for producing containers for foods.

As described above, the foamed sheet 2 relates to a multilayer polyolefin foamed sheet having a gas barrier resin layer, preferably to a container, such as a container for foods, which is required to have gas barrier properties, heat insulation properties, light weight or the like and to a multilayer polyolefin foamed layer suited for the production of the container.

As a method for producing a conventional foamed sheet having a gas barrier resin layer, the following techniques are heretofore known, for example:

(1) A method in which a foamed sheet and a gas barrier resin layer are laminated together by means of an adhesive.
(2) A method in which a material for forming a foamed sheet and a material for forming a gas barrier resin layer are co-extruded through a single extrusion die using separate extruders.

However, the technique (1) is problematic in that the lamination using an adhesive requires an adhering step including a step for applying an adhesive in addition to a step for producing a polyolefin foamed sheet, resulting in a high production cost and in that the organic solvent contained in the adhesive remains in the product and when the product is used as a container for foods, the solvent elutes into the foods. The technique (2) requires no adhering step and has no organic solvent-retention problem or the like. However, since in this technique, the foamed sheet is formed through the co-extrusion of the gas barrier resin layer with another layer, the thickness of the gas barrier resin layer is difficult to be adjusted and, therefore, the thickness of the barrier resin layer varies greatly. Thus, this technique is problematic in that when the resulting multilayer polyolefin foamed sheet is vacuum-formed to provide a container for foods or the like, regions appear in which the gas barrier resin layer is extremely thin or the gas barrier resin layer is broken and there, therefore, is no gas barrier resin layer, sometimes resulting in deterioration in the qualities of foods during their storage.

The method overcomes these problems, and specifically provides a multilayer polyolefin foamed sheet comprising a foam layer and a gas barrier resin layer wherein when the foamed sheet is vacuum-formed, the gas barrier resin layer does not become extremely thin or is not broken.

The container body has a peculiar constitution wherein the part surrounding its opening can be directly sealed with a covering member, wherein at least the sealed part in the part surrounding the opening has a non-foamed layer and wherein the non-foamed layer has a surface roughness, Ra, satisfying $Ra \leq 4\ \mu m$ and a thickness of not less than $5\ \mu m$.

In accordance with this constitution, since the material itself for the container body has no possibility of elution of endocrine disrupting chemicals (so-called environmental hormones) or the like, it can be used as a container for foods with security. In addition, since adhesion between the part of the container body surrounding the opening of the container body and the covering member can be well maintained, no sealability problem arises and the part of the container body surrounding the opening of the container body and the covering member can be sealed without much load, improving yield. In this case, the term "part surrounding the opening" is used as concepts including a flange-like part formed so as to surround the opening and also a mere edge part.

As a result, a container body excellent in food safety, adhesiveness, productivity and utility has been successfully provided. When the surface roughness of the non-foamed layer is $Ra > 4\ \mu m$, adhesion between the part of the container body surrounding the opening of the container body and the covering member may not be well maintained, and the sealability is also deteriorated. Such an occasion, therefore, is not preferred. A thickness of the non-foamed layer of less than $5\ \mu m$ is not preferable since the roughness of the internal foamed layer may not be covered.

A content of low molecular weight organic compounds having from 3 to 4 carbon atoms in the container body of the present invention is preferably not greater than 10000 ppm, more preferably not greater than 1000 ppm and still more preferably not greater than 100 ppm.

In accordance with such constitution, this container body for use as a container for foods is advantageous since it can control influence on the human body with certainty. Such a container body can be obtained, for example, by using carbonic acid gas as a foaming agent during foaming a polyolefin resin.

The container body preferably has a non-foamed layer of a polypropylene with a long-chain branch as an outermost layer.

Such constitution is advantageous. Since an outermost layer of the container body on which a covering member is to be stuck is not foamed, the container body has less surface roughness and is excellent in adhesiveness and sealability. At the same time, since the non-foamed layer is composed of the polypropylene with a long-chain branch, the container body can maintain its strength great. Even if during foaming of a foamed layer which forms the inner layer, gas reaches the surface of a foamed layer, cells can be prevented with certainty from bursting in the surface layer. Even when another kind of layer is laminated in the process of manufacture, surface roughness can be make less.

Furthermore, the container has a peculiar constitution wherein the container has the above-mentioned container body and a covering member which can seal the opening of the container body.

In accordance with this constitution, a foamed container can be provided which is excellent in food safety, adhesiveness, productivity and utility.

In the present invention, the "foamed layer" is a layer having an expansion ratio exceeding 1.5 times, preferably having an expansion ratio of from 2.5 times to 4.0 times. On the other hand, the "non-foamed layer" is a layer having an expansion ratio of from 1.0 time to 1.5 time, preferably from 1.0 time to 1.1 time.

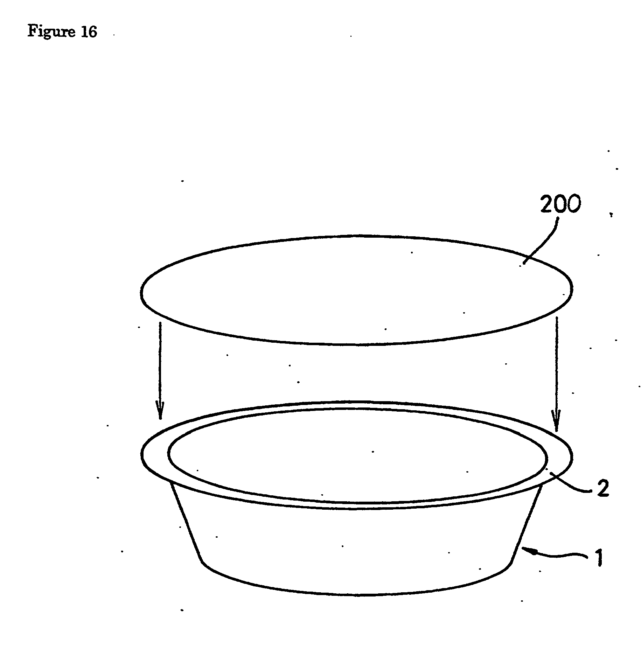

Examples of preferred embodiments of the container body and container include the following ones. Taking a container body 1 for foods which is made of a polypropylene resin and has a shape illustrated in Fig. 16 as an example, an explanation on a polyolefin foamed container body will be made. This container body 1 is used as a foamed container in such a manner that contents such as foods are put in the container body and then a covering member 200 such as one made of paper is stuck onto the flange 2 of the container body which is a part for sealing and is formed around the opening of the container body.

Embodiments of the present invention will be explained on the basis of drawings.

An example of the producing method of the present invention is explained on referring to drawings. This is an example of the production of a multilayer polypropylene foamed sheet having a three-layer structure of non-foamed layer/foamed layer/non-foamed layer wherein a polypropylene foamed with carbonic acid gas as a foaming agent is used as the foamed layer and a polypropylene with a long-chain branch is used as the non-foamed layers.

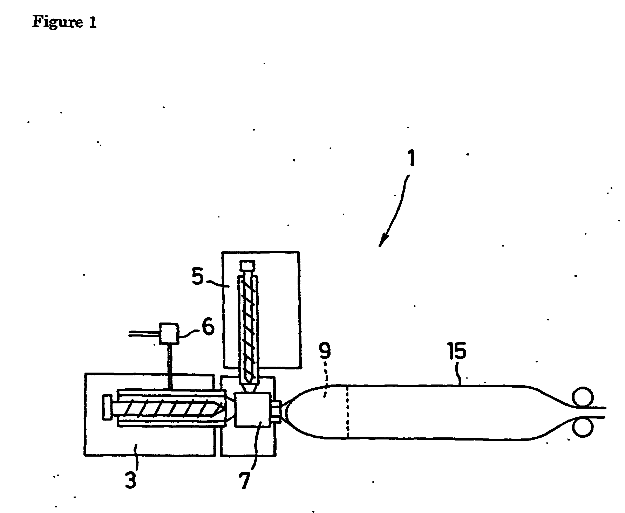

Fig. 1 shows an example of a producing apparatus suitable for the producing method of the present invention. The producing apparatus 1 has a first extruder 3 for extruding the foamed layer, a second extruder 5 for extruding the non-foamed layers, an extrusion die 7 (henceforth, sometimes referred simply to as a die), a mandrel 9 and a haul-off roller 11 as an example of a haul-off device.

The first extruder 3 is equipped with a pump 6 which is an example of a foaming agent-supplying device for supplying carbonic acid gas, which is a foaming agent. A polypropylene resin thrown into a hopper (not shown) of the first extruder 3 is melted in a melting step conducted in a cylinder of the first extruder 3 and sent toward the die 7 by a screw. The carbonic acid gas is fed, at the time when the resin is melted enough, to the melted resin and uniformly dispersed therein. The melted resin is then pumped into the die 7. When the foaming agent-supplying device is placed at a position where the resin supplied in the form of pellets is not sufficiently melted, the foaming agent leaks from the hopper through gaps between the pellets. On the other hand, the foaming agent-supplying device is too close to the die 7, the mixing of the foaming agent becomes uneven because the resin is extruded before it is mixed with the forming agent enough. Therefore, the position where the foaming agent is supplied is preferably is in the central part of the cylinder. A constitution in which a known vent-type extruder is used as the first extruder 3 and carbonic acid gas is supplied under pressure through a vent hole is a preferred embodiment since there is no particular need to improve the extruder.

Although in the above example are used single screw extruders, it is also possible to use a twin screw extruder or the like as at least one of the extruders, preferably as the extruder for extruding the material for forming a polyolefin foamed layer.

The polypropylene with a long-chain branch for forming the non-foamed layer is melted in the second extruder 5 and pumped into the die 7. The type of the die 7 is not particularly limited as long as it has an internal structure suitable for forming a multilayer sheet. Examples thereof include flat dies such as a T die and a coat hanger die, straight dies and circular dies such as a cross head die. The use of circular dies is preferable as describe above. Fig. 1 shows an example in which a circular die is used.

The material for forming a polyolefin foamed layer and the material for forming a polyolefin non-foamed layer are laminated in the die 7 in their melted states and extruded. A retention time of the materials in the die 7 after the lamination is preferably from 0.1 to 20 seconds, more preferably from 0.5 to 15 seconds.

The multilayer polyolefin foamed sheet extruded in a cylindrical form from the die 7 is extended in a direction perpendicular to the extruding direction in the extending step using the mandrel 9 to form a tube 15 having a predetermined diameter, which is folded and hauled by the haul-off roller 11 after cooling. When this folded tube is cut at its both folded portions, two foamed sheets having a three-layer structure are produced. When it is cut at one side, one wide multilayer polyolefin foamed sheet is obtained.

When the resulting two foamed sheets having the three-layer structure are put in layers and adhered together to produce a multilayer polyolefin foamed sheet having three non-foamed layers and having a structure of non-foamed-layer/foamed layer/non-foamed layer/non-foamed layer/foamed layer/non-foamed layer.

A multilayer structure may be formed by laminating further foamed sheets. Furthermore, when the non-foamed layer is composed of a polyolefin-based adhesive resin with a long-chain branch, the foamed sheet having the three-layer structure has the non-foamed layer composed from the adhesive resin on its surface. Therefore, when two such foamed sheets are adhered in layers, a multilayer polyolefin foamed sheet can be obtained which has a five-layer structure wherein the two sheet are firmly adhered.

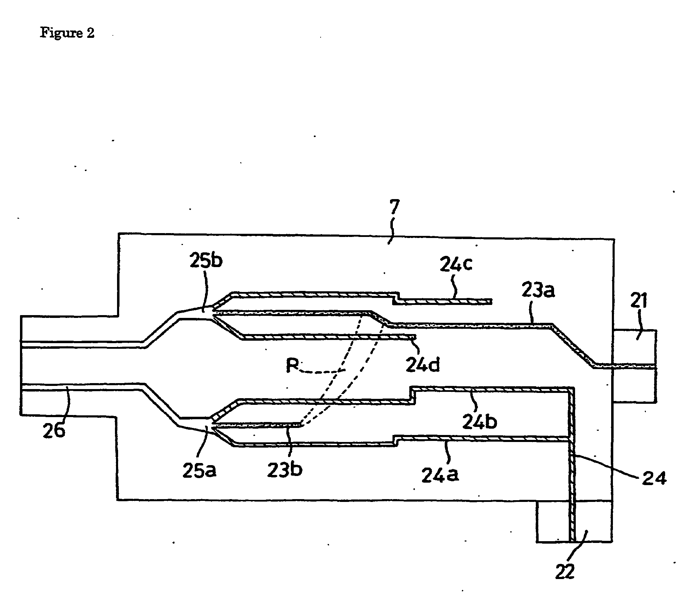

A preferred embodiment of structure of the die is illustrated sectionally in Fig. 2.

The die used in this embodiment is a circular die. In the die 7 are provided channels 23a and 23b through which a resin for forming a foamed layer flows and channels 24, 24a, 24b, 24c and 24d through which a resin for forming a non-foamed layer flows.

A head 21 of the first extruder 3 is jointed to the end of the die 7 in its source side of the resin channel direction and a head 22 of the second extruder 5 is jointed to the side of the die in its source side of the resin channel direction. A melted resin for foming the foamed layer supplied from the head 21 enters the channel 23a first and then is sent toward the outlet of the die. The melted resin is divided on the way by means of a pass P and sent to the channel 23b.

On the other hand, the melted resin for forming the non-foamed layer is supplied from the head 22 of the second extruder 5 and divided through the channel 24 into the channels 24a and 24b. This resin is supplied so as to cover the both surfaces of a foamed layer so as to adhere to the both sides of a foamed layer in the channel 23b and is united in layers in a channel 25a. The melted resins supplied to the channels 24a and 24b pass through dividing channels (not shown) similar to a pass P and are supplied to channels 24c and 24d, respectively, so as to cover the both surfaces of a foamed layer in the channel 23a and united in layers in a channel 25b.

The melted resin which has been united into a cylindrical form having a three-layer structure in the channels 25a and 25b is extruded from the outlet 26 of the die. By the release of the melted resin under atmospheric pressure, carbonic acid gas contained in the resin for forming a polyolefin foamed layer expands to form cells, forming a foamed layer.

Passing the sheet or tube extruded from the die through a vacuum chamber to advance foaming in order to make an expansion ratio higher is also a preferred embodiment. When the tube is cut along its longitudinal direction, a multilayer polyolefin foamed sheet having a three-layer structure is produced.

Although in the above example are used single screw extruders, it is also possible to use a twine screw extruder or the like as at least one of the extruders, preferably as the extruder for extruding a material for forming the foamed layer.

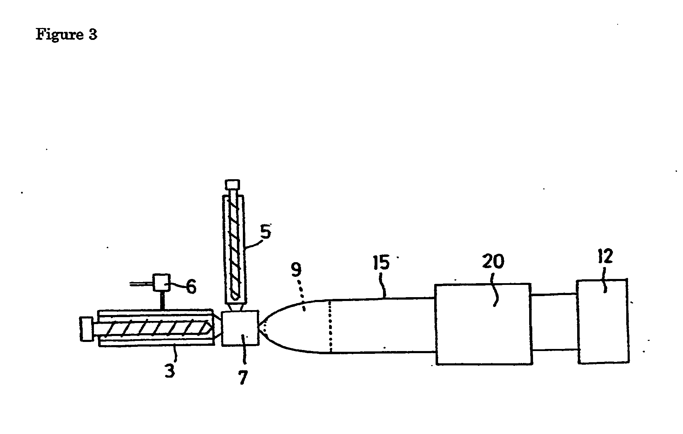

Fig. 3 illustrates an example wherein a vacuum chamber 20 is further provided to the example shown in Fig. 1 and a pressure-reducing step is provided by using the vacuum chamber. The numeral 12 indicates a haul-off device.

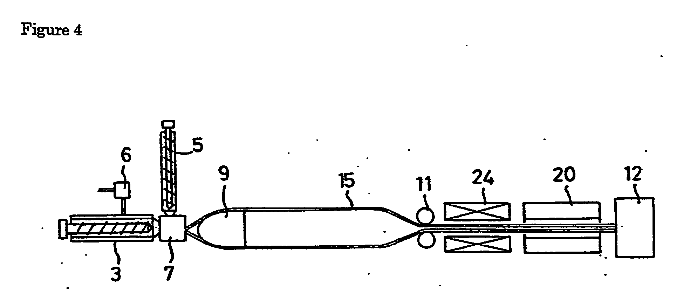

Fig. 4 illustrates an example wherein a heating device 24, a vacuum chamber 20 for increasing an expansion ratio of a multilayer polyolefin foamed sheet heated and a haul-off device are provided beyond the haul-off roller 11 shown in Fig. 1.

Raw materials to be used in the producing method of the present invention will be described.

Examples of polyolefin (resin) for forming a foamed layer include homopolymers of ethylene, propylene, butene and the like, copolymers prepared by using two or more kinds of monomers selected from those listed previously, copolymers of at least one monomer selected from those listed previously and other monomers. Examples of the co-polymers include ethylene/$\alpha$-olefin copolymers and propylene/$\alpha$-olefin copolymers.

Examples of ethylene-based resins such as polyethylene (PE) and copolymers of ethylene and other monomers include polyethylene such as low density polyethylene and high density polyethylene; ethylene/$\alpha$-olefin copolymers such as ethylene/propylene copolymers, ethylene/butene-1 copolymers, ethylene/4-methyl-1-pentene copolymers, ethylene/hexene-1 copolymers and ethylene/octene-1 copolymers; ethylene-based copolymers comprising repeat units derived from at least one kind of vinyl monomer and repeat units derived from ethylene such as ethylene/methyl methacrylate copolymers and ethylene/vinyl acetate copolymers; and their mixtures.

Examples of propylene/$\alpha$-olefin copolymers include propylene-based polymers such as propylene/$\alpha$-olefin block copolymers and propylene/$\alpha$-olefin random copolymers and their mixtures. Examples of the $\alpha$-olefin in the polypropylene/$\alpha$-olefin block copolymers and propylene/$\alpha$-olefin random copolymers include $\alpha$-olefins having 2 and 4 to 11 carbon atoms such as ethylene, butene-1 and octene-1.

Of the polyolefins listed above, (a) a polypropylene (PP) with a long-chain branch and (b) a polypropylene prepared by producing, in a first stage, a crystalline PP having an intrinsic viscosity of 5 dl/g or more and successively producing, in a second stage, a crystalline PP having an intrinsic viscosity of less than 3 dl/g, the polypropylene containing the PP obtained in the first stage in an amount of 0.05 to 25% by weight and having, as a whole, an intrinsic viscosity of less than 3 dl/g and Mw/Mn of less than 10 can be listed as preferable materials because foams made of these resins have great uniformities and multilayer polyolefin foamed sheets excellent in vacuum formability can be produced. One of the commercially available products of (a) is Polypropylene PF814 manufactured by Montell. The above-mentioned (b) can also be used preferably.

A foaming agent to be used for forming the foamed layer is preferably an inert substance such as water and carbonic acid gas in view of the influence to the environment and the like. In particular, when polypropylene is used as a resin for forming a polyolefin foamed layer, the use of carbonic acid gas is preferred. The use of such foaming agents can easily make contents of low-molecular-weight organic compounds having 3 to 4 carbon atoms in the multilayer polyolefin foamed sheet to be 100 ppm or less.

The polyolefin-based resin for forming a polyolefin non-foamed layer is a polypropylene with a long-chain branch or a polyolefin-based adhesive resin with a long-chain branch. These preferably have a branching index, [A], satisfying $0.20 \leq [A] \leq 0.98$ since a laminated foam excellent in appearance, vacuum formability and the like can be produced.

The branching index expresses the degree of long-chain branching and is a value defined by the following expression:

$$\text{Branching index } [A] = [\eta]\text{Br}/[\eta]\text{Lin}$$

In the expression, $[\eta]$Br is the intrinsic viscosity of a branched polypropylene and $[\eta]$Lin is the intrinsic viscosity of a semicrystalline linear polypropylene, which is mainly isotactic, having a weight average molecular weight substantially equal to that of the branched polypropylene.

An intrinsic viscosity is also known as a limiting viscosity number and is a measure of the ability of a polymer molecule to increase a viscosity of a solution in its general meaning. The intrinsic viscosity depends on the size and the shape of the polymer molecule to be dissolved. Therefore, in comparison of a non-linear polymer and a linear polymer having a weight average molecular weight equal to that of the non-linear polymer, the intrinsic viscosity is a value indicating the configuration of the non-linear polymer molecule. That is, the foregoing ratio of the intrinsic viscosities is the measure of the degree of branching of the non-linear polymer and is defined as a branching index. A method for measuring the intrinsic viscosities of the polypropylene with a long-chain branch and the polyolefin-based adhesive resin with a long-chain branch is disclosed in J. Appl. Polym. Sci., 14, 2947-2963 (1970), Elliot et al. In this specification, all intrinsic viscosities are obtained from the measurements on samples dissolved in tetralin or orthodichlorobenzene at 135°C.

As the polypropylene with a long-chain branch for forming the polypropylene non-foamed layer, the above-mentioned Montell's product and the like are commercially available and can be used preferably. Although a thickness of the polyolefin non-foamed layer is not particularly limited as long as its smoothness of a surface, that is, its appearance is good, it is preferably not less than 1 $\mu$m, more preferably not less than 10 $\mu$m, still more preferably not less than 50 $\mu$m. The upper limit of the thickness may be optionally set in accordance with the total thickness of the multilayer polyolefin foamed sheet and applications thereof, for example. When the polypropylene non-foamed layer is too thick, characteristics of the foamed layer are not shown satisfactorily.

In the producing method of the present invention, the polyolefin non-foamed layer is a layer having an expansion ratio of not less than 1.0 time and not greater than 1.5 time, preferably not less than 1.0 time and not greater than 1.1 time. The polyolefin foamed layer is a layer having an expansion ratio of greater than 1.5 time, preferably from 2.5 times to 40 times. Expansion ratios of less than 2.5 times may result in foams insufficient in properties such as light weight and heat insulation property. When the expansion ratio exceeds 40 times, it may become difficult for a foamed sheet to be produced and cells will not be able to be prevented from bursting during vacuum forming. The expansion ratio can be adjusted, for example, by selecting the amount of the foaming agent to use and by conducting vacuum processing after forming the foamed sheet.

Examples of the polyolefin-based adhesive resin with a long-chain branch for forming a polyolefin non-foamed layer include:

1) copolymers of a olefin monomer and at least one kind of monomer selected from the group of monomers consisting of unsaturated carboxylic acids, unsaturated carboxylic acid anhydrides, epoxy group-containing vinyl monomers, unsaturated carboxylic acid esters and vinyl esters; and
2) acid-modified olefin-based polymers grafted with unsaturated carboxylic acids or their anhydrides.

Examples of the preceding 1) copolymers of an olefin monomer and at least one kind of monomer selected from the group of monomers consisting of unsaturated carboxylic acids, unsaturated carboxylic acid anhydrides, epoxy group-containing vinyl monomers, unsaturated carboxylic acid esters and vinyl esters include ethylene/(meth)acrylic acid copolymers, metal-crosslinked products of ethylene/(meth)acrylic acid copolymers, ethylene/glycidyl methacrylate copolymers, ethylene/glycidyl methacrylate/vinyl acetate copolymers, ethylene/glycidyl methacrylate/methyl (meth)acrylate copolymers, ethylene/(meth)acrylic ester copolymers, ethylene/(meth)acrylic ester/maleic anhydride copolymers and ethylene/vinyl acetate copolymers.

Examples of the preceding 2) acid-modified olefin-based polymers grafted with unsaturated carboxylic acids or their anhydrides include maleic anhydride-graft modified ethylene-based polymers and maleic anhydride-graft modified propylene-based polymers.

In preferred embodiments, known additives are incorporated to the material for forming a polyolefin foamed layer and that for a polypropylene non-foamed layer. Examples of such additives include antioxidants, light stabilizers, ultraviolet absorbers, anti-clouding agents, plasticizers, antistatic agents, lubricants, colorants, fillers and other high molecular compounds (particulars are disclosed in "Technique of Separation and Analysis of Additives to Polymers (separate volume)" published by Japan Science Information). These additives may be added in such amounts that the working-effect of the present invention is not deteriorated.

Examples of the antioxidants include phenol-based antioxidants such as 2,5-di-tert-butylhydroquinone, 2,6-di-tert-butyl-p-cresol, 4,4'-thiobis-(6-tert-butylphenol), 2,2'-methylene-bis(4-methyl-6-tertbutylphenol), octadecyl-3-(3,5'-di-tert-butyl-4'-hydroxyphenyl)propionate and 4,4'-thiobis-(6-tert-butylphenol), phosphine-based antioxidants such as phenyldiisodecylphosphite, diphenylisooctylphosphite, triphenylphosphite, trinonylphenylphosphite, tris-(2,4-di-tert-butylphenyl)phosphite, 4,4'-isopropylidenediphenolalkylphosphite, 1,1,3-tris(2-methyl-4-ditridecyl)phosphite and 5-tert-butylphenylbutanephenyldi(tridecyl)phosphite, sulfur-based antioxidants such as dilauryl 3,3'-thiopropionate, ditridecyl 3,3'-thiodipropionate, dimyristyl 3,3'-thiodipropionate, distearyl 3,3'-thiodipropionate, laurylstearyl 3,3'-thiopropionate, bis[2-methyl-4-(3-n-alkylthiopropionyloxy-5-tert-butylphenyl)sulfide, pentaerythritol tetra($\beta$-lauryl-thiopropionate), 2-mercap-tobenzimidazole and 2-mercapto-6-methylbenzimidazole.

The multilayer polyolefin foamed sheets obtained by the producing method of the present invention can be used for various applications. Concrete applications include containers for foods including microwavable containers (HMR), heat insulating materials, cushioning materials for sporting goods and crating materials, insulators, automotive parts such as ceiling materials for automobiles, sealing materials, construction materials and applications in the aerospace industry using resins required to have light weight, heat insulating properties and the like.

Embodiments of the present invention will be explained on the basis of drawings.

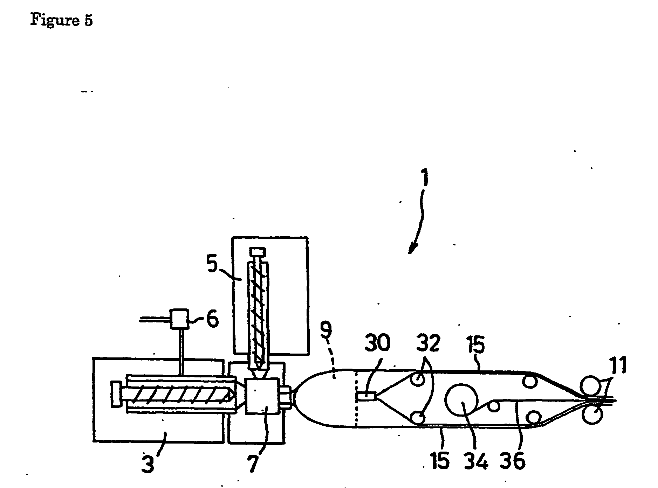

Fig. 5 illustrates an example of a producing apparatus preferable for the producing method 2. A multilayer polyolefin foamed sheet having a gas barrier resin layer is produced by using polypropylene for a foam layer, producing a multilayer polyolefin foamed sheet in a tubular (cylindrical) form having non-foamed layers on the both sides of the foamed layer, incising continuously this sheet along its longitudinal direction, supplying a sheet for forming a gas barrier resin layer between the resulting sheets, putting them in layers and adhering them together under pressure. The multilayer polyolefin foamed sheet obtained by this method may have a seven-layer structure of non-foamed layer/foamed layer/non-foamed layer/gas barrier resin layer/non-foamed layer/foamed layer/non-foamed layer and gas barrier resin layer/non-foamed layer/foamed layer/non-foamed layer/non-foamed layer/foamed layer/non-foamed layer.

The producing apparatus 1 depicted in Fig. 5 has a first extruder 3 for extruding a polypropylene foamed sheet layer, a second extruder 5 for extruding non-foamed layers, an extrusion die 7, a mandrel 9, a cutter 30, rollers 32, an unprocessed gas barrier resin sheet 34 and a haul-off roller 11.

The first extruder 3 is equipped with a pump 6 which is an example of a foaming agent-supplying device for supplying carbonic acid gas, which is the foaming agent. A polypropylene resin fed into the cylinder of the first extruder 3 from a hopper of the first extruder 3 is melted with being sent toward the die 7 by a screw. The carbonic acid gas is fed, at the time when the resin is melted enough, to the melted resin and uniformly dispersed therein. The melted resin is then sent into the die 7. A constitution in which a known vent-type extruder is used as the first extruder 3 and carbonic acid gas is supplied under pressure through a vent hole is a preferred embodiment since there is no particular need to improve the extruder.

The polypropylene with a long-chain branch for forming a polyolefin non-foamed layer is melted in the second extruder 5 and pumped into the extrusion die 7 (henceforth, sometimes referred simply to as a die). The type of the die 7 is not particularly limited as long as it has an internal structure suitable for forming a multilayer sheet. Examples thereof include flat dies such as a T-die and a coat hanger die, straight dies and circular dies such as a cross head die.

It is preferable that the multilayer polyolefin foamed sheet extruded in a tubular form from the extrusion die 7 is extended by the mandrel 9 to form a tube 15 having a predetermined diameter. The use of the mandrel allows a wide and thin foamed sheet layer to be produced easily.

The mandrel 9 has workings to extend the multilayer polyolefin foamed sheet extrusion formed in a direction perpendicular to the extruding direction. An extending ratio is preferably from 1.5 time to 4.5 times.

In the production of the multilayer polyolefin foamed sheet, an extending step for extending the co-extruded multilayer polyolefin foamed sheet by means of an extending device in a direction perpendicular to the extruding direction is conducted after the co-extruding step.

By carrying out the extending step, a thin sheet which is difficult to be produced only by a simple extrusion can be produced easily. Moreover, since the extension is carried out after the extrusion, using a small-diameter extruder can produce a wide sheet.

When a flat die such as a T-die is used as the extrusion die, a tenter such as a clip tenter and a pin tenter is used as the extending device.

In the production of the multilayer polyolefin foamed sheet, the co-extruding step is preferably carried out under conditions satisfying the following expression

$$10 \geq Q \text{ (kg/hr)}/W \text{ (mm)} \geq 0.3$$

wherein "Q (kg/hr)" indicates the amount of the resin to be extruded through the extrusion die and "W (mm)" indicates a die lip diameter. More preferably, Q (kg/hr)/W (mm) is equal to or more than 0.5.

When Q (kg/hr)/W (mm) is less than 0.3, coarsening of cells and poor appearance such as stripes may occur. When it exceeds 10, there may arise a problem of increase in equipment costs.

The multilayer polypropylene foamed sheet 15 passed on the mandrel, on the both surfaces of the foamed sheet being formed polyolefin non-foamed layer, is incised with the cutter 30 to produce two flat sheets by means of the rollers 32. An unprocessed gas barrier resin sheet 34 is placed between the two multilayer polypropylene foamed sheets 15 and the gas barrier resin sheet 36 released is sent to between the two multilayer polypropylene foamed sheets 15 and adhered under pressure by means of the haul-off roller 11 (a laminating step) to form a multilayer polyolefin foamed sheet. A preheating step for heating laminating surfaces of the gas barrier resin sheet 36 is carried out before laminating this film with the two multilayer polypropylene foamed sheets 15.

Fig. 2 illustrates a cross section of a circular die suitable for carrying out the present invention, which is also used in the producing apparatus depicted in Fig. 5.

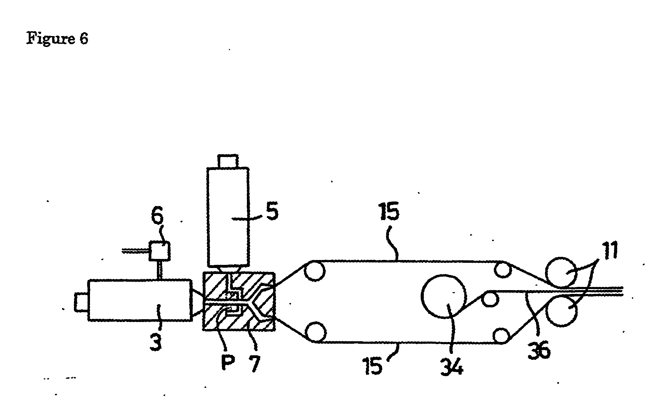

In the example illustrated in Fig. 6, one first extruder 3 and one second extruder 5 are provided and the extrusion die 7 is one flat die which has two extrusion openings 7a and 7b parallel to each other. A pass P is provided so that a material for forming a polyolefin non-foamed layer is supplied to the both sides of a material for forming a polyolefin foamed layer. When this apparatus is used, the material for forming a polyolefin foamed layer and that for forming a polyolefin non-foamed layer are respectively supplied to the extrusion openings to be co-extruded in the co-extruding step, producing two multilayer polyolefin foamed sheets 15 having a two-layer structure of non-foamed layer/foamed layer. In the laminating step, a multilayer polyolefin foamed sheet is produced by supplying a gas barrier resin sheet 36 to between the two multilayer polyolefin foamed sheets 15 and adhering them together preferably in such a manner that the non-foamed layers come outside.

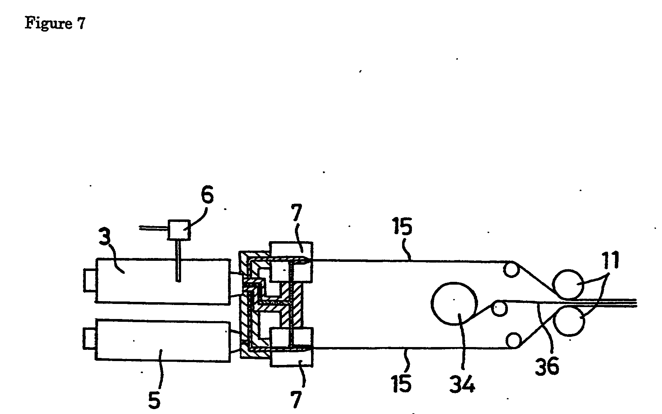

In an example illustrated in Fig. 7, the producing apparatus has one first extruder 3 and one second extruder 5. The extrusion dies 7 are to two flat dies, each of which has one parallel extrusion opening. In the co-extruding step, the material for forming a polyolefin foamed layer and that for forming a polyolefin non-foamed layer are divided and supplied to two flat dies and then co-extruded to produce two multilayer polyolefin foamed sheets 15 having a two-layer structure of non-foamed layer/foamed layer, the non-foamed layers being present outside. In the laminating step, supplying the gas barrier resin sheet 36 to between the two multilayer polyolefin foamed sheets 15 and adhering them together under pressure produce a multilayer polyolefin foamed sheet.

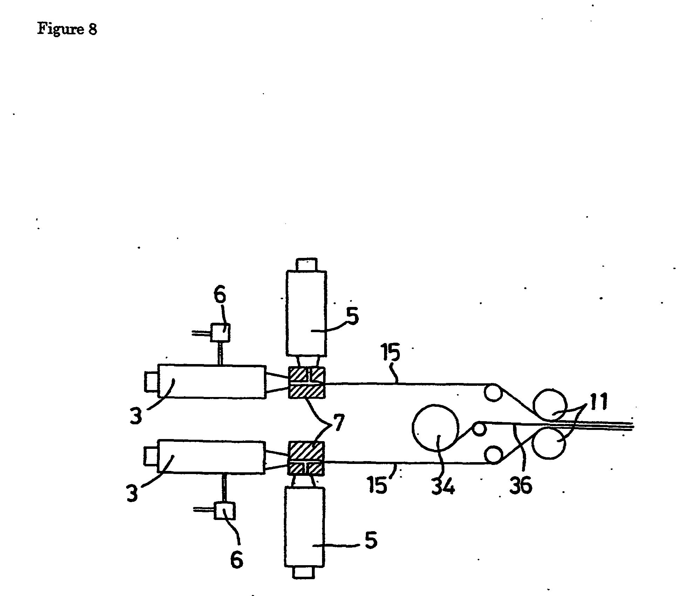

The producing apparatus illustrated in Fig. 8 has two first extruders 3, two second extruders 5 and two extrusion dies 7, which are selected from a flat die and a circular die. One apparatus for producing one multilayer polyolefin foamed sheet comprises one first extruder, one second extruder and one extrusion die.

In the co-extruding step, the material for forming a polyolefin foamed layer and that for forming a polyolefin non-foamed layer are supplied to a pair of apparatuses for producing multilayer polyolefin foamed sheets and co-extruded. Thus, two multilayer polyolefin foamed sheets are formed. In the laminating step, supplying the gas barrier resin sheet 36 to between the two multilayer polyolefin foamed sheets 15 and adhering them together under pressure produce a multilayer polyolefin foamed sheet.

In the producing method 2 can be used raw materials which are the same as those used in the producing method of the present invention describe above.

Next, an explanation will be made on a gas barrier resin sheet which forms a gas barrier resin layer to be used in the producing method 2.

A resin to be used for the gas barrier resin sheet is not limited particularly. Examples thereof include the followings. Saponified products of polyvinyl esters such as polyvinyl alcohol; saponified products of ethylene/vinyl ester copolymers such as ethylene/vinyl alcohol copolymers; polyester-based resins such as polyethylene terephthalate, polybutylene terephthalate, polyethylene naphthalate and polyhydroxybenzoic acid; polyamide-based resins such as Nylon-6, Nylon-6,6, condensation polymerization products of metaxylenediamine and adipic acid, polymethyl methacrylimide, diethylenetriamine/adipic acid copolymers and salts thereof; aramide-based resins; acrylic resins such as polymethyl methacrylate, polyacrylic acid, poly(sodium acrylate), poly-2-hydroxyethyl acrylate, poly-2-hydroxyethyl methacrylate, polyacrylamide, ethylene/acrylic acid copolymers and salts thereof; halogen-containing resins such as polyvinyl chloride, polyvinylidene chloride, polyvinylidene fluoride and polytetrafluoroethylene; and engineering plastics such as polycarbonate resins, polysulfone resins, polyethersulfone resins, polyether ether ketone resins, polyphenylene ether resins, polyphenylene oxide resins, polyallylenesulfide resins, polymethylene oxide resins and polyacetal resins. There can also be used so-called modified resins which are obtained by graft-modification, crosslinking or molecular-chain-terminal-modification of these resins.

The gas barrier resin sheet to be used can be produced by a method in which the above resins or compositions thereof are formed into sheets (or films) from their melted states and a method in which liquid films are formed from solutions of the above resins and dried.

The method in which a resin or a composition thereof is formed into a sheet (or a film) from its melted state may be, but is not limited to, co-extrusion, melt coating, extrusion lamination and dry lamination which are conducted in conventional forming methods such as T-die forming, inflation forming, injection molding, blow molding and stretch blow molding. In a preferred embodiment, the sheets (or films) obtained by the preceding methods are subjected to conventional stretch processing such as uniaxial stretching, zone stretching, flat sequential stretching; flat simultaneous biaxial stretching and tubular simultaneous stretching.

For producing a sheet (or a film) by the method in which a resin or a composition thereof is dissolved in a solvent and a liquid film is formed from the resulting solution and then dried can be used, for example, a method in which a resin or a composition thereof containing a medium such as water is coated onto a release sheet (or film) to form a liquid film, which is then dried and peeled off.

Examples of the method for coating the resin or the composition thereof include roll coating methods such as the direct gravure method, the reverse gravure method, the microgravure method, the double roll beat coating method, the bottom-feed triple roll reverse coating method, the doctor knife method, the die coating method, the dip coating method, the bar coating method and coating methods in which some of the foregoing methods are combined.

The gas barrier resin sheet may have a single layer and may be a multilayer sheet where a gas barrier resin layer is laminated with another resin.

The layer of another resin to be laminated in the gas barrier resin sheet is not particularly limited and a resin to form the foamed layer and a resin to form the non-foamed layer are preferably used.

Moreover, the gas barrier resin sheet may have a multilayer structure where a layer of another resin is laminated in the gas barrier resin laminated sheet. The resin layer to be laminated in the gas barrier resin laminated sheet is not particularly limited and may be a layer of a thermoplastic resin which is either stretched or not stretched, preferably a layer of a non-stretched polyolefin-based resin layer.

The multilayer polyolefin foamed sheet produced by the producing method 2 can be used in various applications including containers required to have gas barrier properties, heat insulation properties, light weight or the like such as containers for foods or sheets suited to be used in the production of such containers.

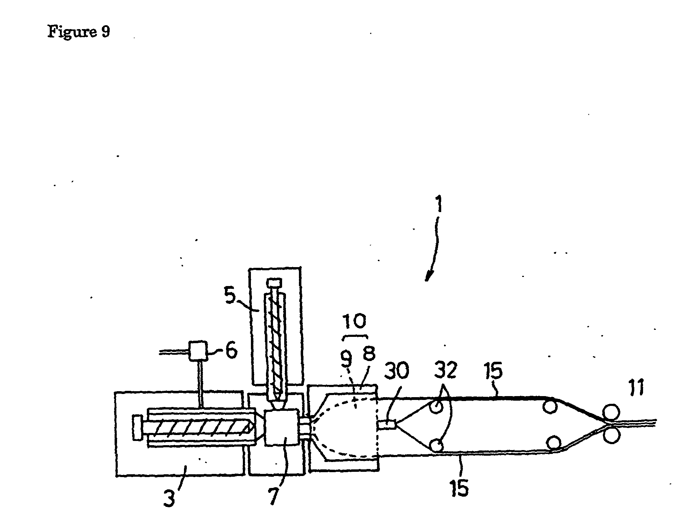

Fig. 9 illustrates an example of the producing apparatus 2. In this example, polypropylene foamed by using carbonic acid gas as a foaming agent is used as the foamed layer, the polypropylene with a long-chain branch is used as the non-foamed layer and a multilayer polypropylene foamed sheet having a three-layer structure of non-foamed layer/foamed layer /non-foamed layer is produced.

A producing apparatus 1 comprises a first extruder 3 for extruding a foamed layer, a second extruder 5 for extruding a non-foamed layer, a circular die 7 (henceforth, sometimes referred simply to as a die) which is an extrusion die, a vacuum chamber 10 and a haul-off roller 11 as an example of a haul-off device. The vacuum chamber is constituted from a mandrel 9, which is an inner cylinder, and an outer cylinder 8.

The first extruder 3 is equipped with a pump 6 which is an example of a foaming agent-supplying device for supplying carbonic acid gas, which is a foaming agent. A polypropylene resin thrown into a hopper (not shown) of the first extruder 3 is melted in a melting step conducted in a cylinder of the first extruder 3 and sent toward the circular die 7 by a screw. The carbonic acid gas is fed, at the time when the resin is melted enough, to the melted resin and uniformly dispersed therein. The melted resin is then pumped into the die 7 (a melt kneading step) and extruded from a resin outlet of the die 7 to form into a cylindrical sheet (an extruding step).

When the foaming agent-supplying device is placed at a position where the resin supplied in the form of pellets is not sufficiently melted, the foaming agent leaks from the hopper through gaps between the pellets. On the other hand, the foaming agent-supplying device is too close to the die 7, the mixing of the foaming agent becomes uneven because the resin is extruded before it is mixed with the foaming agent enough. Therefore, the position where the foaming agent is supplied is preferably is in the central part of the cylinder. A constitution in which a known vent-type extruder is used as the first extruder 3 and carbonic acid gas is supplied under pressure through a vent hole is a preferred embodiment since there is no particular need to improve the extruder. Furthermore, another preferable embodiment is use of a screw having a mechanism for reducing a rate of sending the resin locally such as a retro-spiral part in a case that a gas is used as a foaming agent.

Although in the above example are used single screw extruders, it is also possible to use a twin screw extruder or the like as at least one of the extruders, preferably as the extruder for extruding the material for forming the foamed layer.

The cylindrical sheet having plural layers extruded from the circular die 7 into the vacuum chamber jointed to the circular die becomes a foam immediately (a pressure-reducing step). Unlike the case where the cylindrical sheet is extruded in the air, it is not cooled once and the whole material for forming a polyolefin foamed layer is foamed at uniform temperature under reduced pressure. Therefore, a foamed layer which is uniform and has a high expansion ratio is formed.

In the example illustrated in Fig. 9, since the mandrel 9 is used as the inner cylinder, the cylindrical sheet having a foamed layer is extended in a direction perpendicular to the extruding direction and formed into a tubular multilayer polyolefin foamed sheet 15 having a predetermined diameter, which is incised by a cutter at the exit of the vacuum chamber. The haul-off roller 11 then hauls a wide multilayer polyolefin foamed sheet. When the tube 15 is cut with two cutter 30 at two points opposing each other, two multilayer polyolefin foamed sheets having a three-layer structure are produced. Fig. 2 illustrates a cross section of a circular die suited to be used in execution of the present invention, which is used in the producing apparatus depicted in Fig. 9.

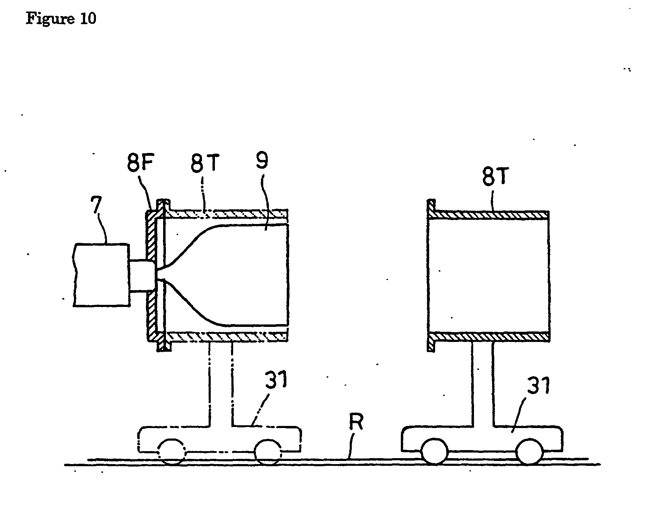

Figs. 10 to 12 illustrate examples of a structure of a vacuum chamber 10 composed of an outer cylinder 8 and a mandrel 9.

In the example depicted in Fig. 10, the mandrel 9 and the outer cylinder 8 are separated. The outer cylinder 8 is composed of a flange 8F mounted to a circular die 7 and a cylinder 8T mounted to a truck 31. The mandrel 9 is fixed to a resin outlet of the circular die 7. The cylinder 8T is set so as to move freely between a position where it abuts on and is fixed to the flange 8F to cover the mandrel 9 to form the vacuum chamber 10 and a position apart from the flange 8F. The cylinder 8T can be replaced with another cylinder having a different inner diameter. In this example, by using cylinders 8 with different inner diameters, an inner diameter of a multilayer polyolefin foamed sheet to be produced can be changed easily.

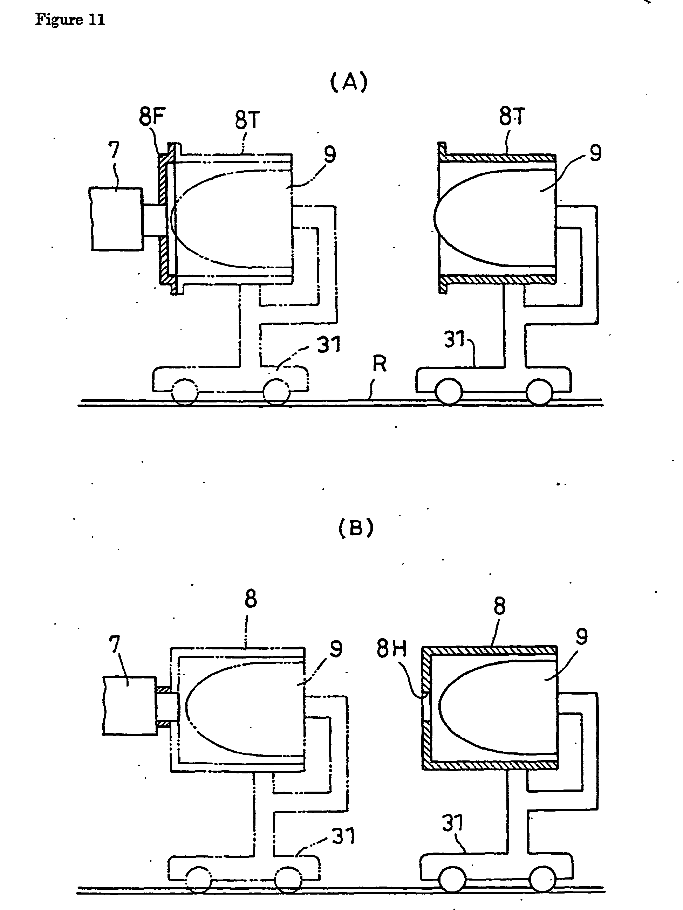

Figs. 11(A) and 11(B) illustrate examples in which a mandrel 9 and a cylinder 8T are fixed to the same truck 31. The mandrel 9 and the cylinder 8T can be moved with being combined together. In the example shown in Fig. 11(A), the outer cylinder is composed of the cylinder 8T and a flange 8F which mounted to the circular die 7. End parts of them are made abut to each other to be fixed together, forming the vacuum chamber.

Fig. 11(B) illustrates an example where an outer cylinder is monolithic and is designed so that when a hole 8H provided in its tip part is fitted to the tip of a die 7, a vacuum chamber 10 is formed.

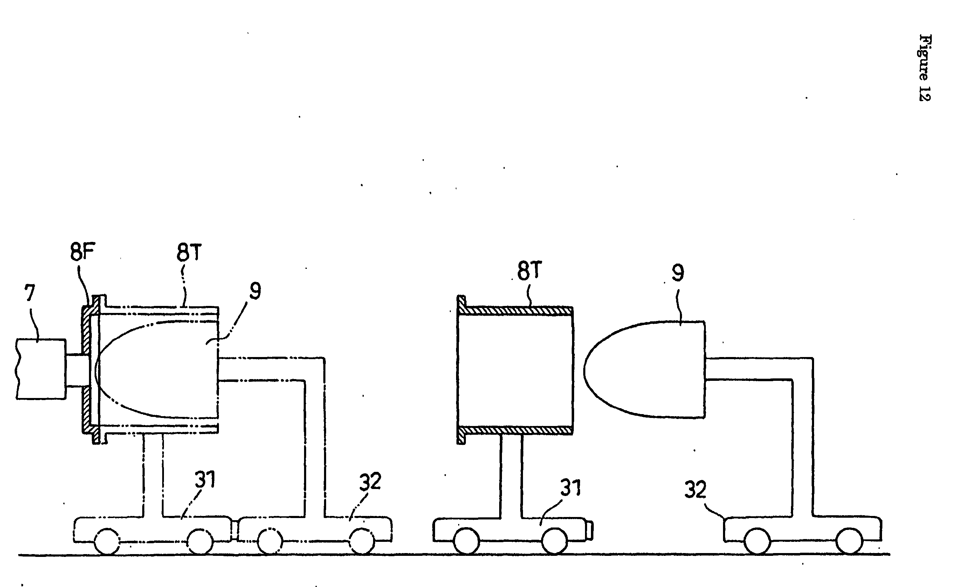

In the example illustrated in Fig. 12, a cylinder 8T which constitutes an outer cylinder 8 is mounted to a truck 31 and a mandrel 9 is mounted to another truck 32. The cylinder 8T and the mandrel 9 can be moved along the same axial center to form a vacuum chamber 10. In this example, by altering a combination of outer diameters of the cylinder 8T and the mandrel 9, multilayer polyolefin foamed sheets being different in width and thickness from each other can be produced easily.

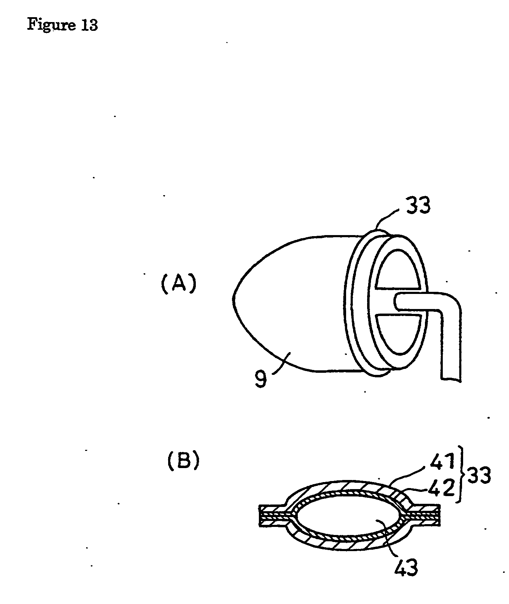

Figs. 13(A) and 13(B) illustrate examples of a sealing member and of its installation. In the example shown in Fig 13(A), a sealing member 33 is installed in a downstream part of the mandrel along the flow of a multilayer polyolefin foamed sheet, that is, a part of the mandrel where the extension of the diameter of the cylindrical sheet is completed. The sealing member may also be installed in a groove formed in the outer cylinder 8.

Fig. 13(B) illustrates an example of a structure of the sealing member 33. The sealing member may be, for example, an O ring, which is made of rubbery elastic material, like silicone rubber and fluororubber and also may be a hollow member shown in Fig. 13(B). In the example shown in Fig. 13(B), the outer part is a layer 41 of resin such as poly(ethylene tetrafluoride) and silicone rubber. A layer 42 with a high rigidity, like a glass fiber cloth and a resin sheet (or film) is laminated as an inner layer. By blowing pressurized air into a hollow portion 43, the sealing member 33 is expanded to a predetermined outer diameter to seal. Plural sealing members may be provided. Those of the expansion type shown in Fig. 13(B), each of them having different outer diameters, are preferably used. When one sealing member having a diameter selected depending on the thickness of a desired multilayer polyolefin foamed sheet is expanded and the other are shrunk, products having different thicknesses can be produced easily.

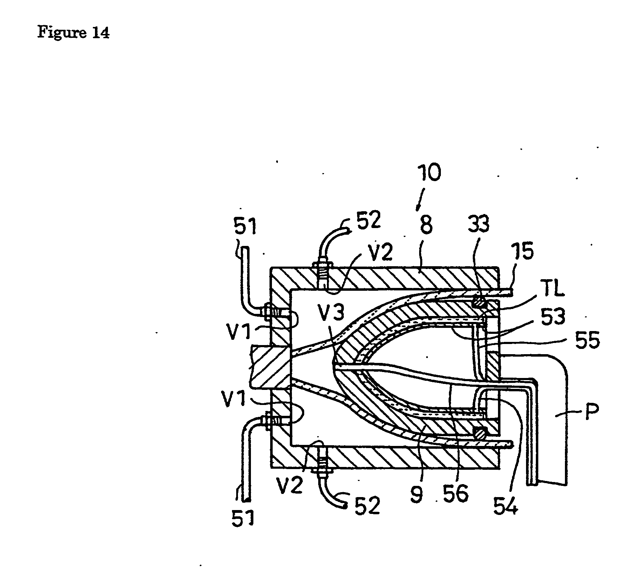

Fig 14 shows an example of a structure of the vacuum chamber 10 and a state where the multilayer polyolefin foamed sheet 15 is under production. In the outer cylinder 8 are provided with outer-cylinder-pressure-reducing holes V1 and V2 which are jointed to exhaust pipes 51 and 52, respectively. Only one of the outer-cylinder-pressure-reducing holes V1 and V2 may be provided. In the mandrel, which is an inner cylinder, an inner-cylinder-pressure-reducing hole V3, an exhaust pipe 56 which joints the inner-cylinder-pressure-reducing hole V3 to a pressure reducing device, and a jacket 53 for controlling temperature are provided. The apparatus is designed in such a manner that a heating medium TL passes and circulates in pipes 54 and 55 which are jointed to a temperature controlling device and provided along a support P, being able to be both cooled and heated. The jacket may be replaced by a pipe which contacts an inner wall of the mandrel 9. The jacket and the pipe do not have to be provided throughout the mandrel 9. A part to be heated and a part to be cooled may be provided. Temperature control of the outer cylinder 8 can be done in a similar manner to this.

Evacuation of the vacuum chamber 10 is carried out by means of a vacuum pump jointed to the exhaust pipe 51, 52 and 56. Adjustment of the degree of pressure reduction is conducted by, for example, a pressure-regulating valve or a vacuum-breaking valve. In the adjustment of the degree of pressure reduction, the pressure-regulating valve and the vacuum-breaking valve may be used together, or only one of them may be used. Applicable as the pressure-regulating valve include ones conventionally used, such as that of a type which controls an inlet pressure of the vacuum pump by changing an aperture thereof using a pressure detector and a pressure transmitter and that of a type which controls pressure by itself with monitoring a pressure gauge.

The degree of pressure reduction in the vacuum chamber 10 is generally 100 mmHg or more in terms of a differential pressure from atmospheric pressure. The use of polypropylene-based resins needs a differential pressure (a difference from atmospheric pressure) of about 200 mmHg. The differential pressure is preferably set to be 300 mmHg or more, more preferably from 350 to 700 mmHg. The optimal degree of pressure reduction varies depending on the resin and the foaming agent to be used and also varies depending on an expansion ratio of a desired multilayer polyolefin foamed sheet.

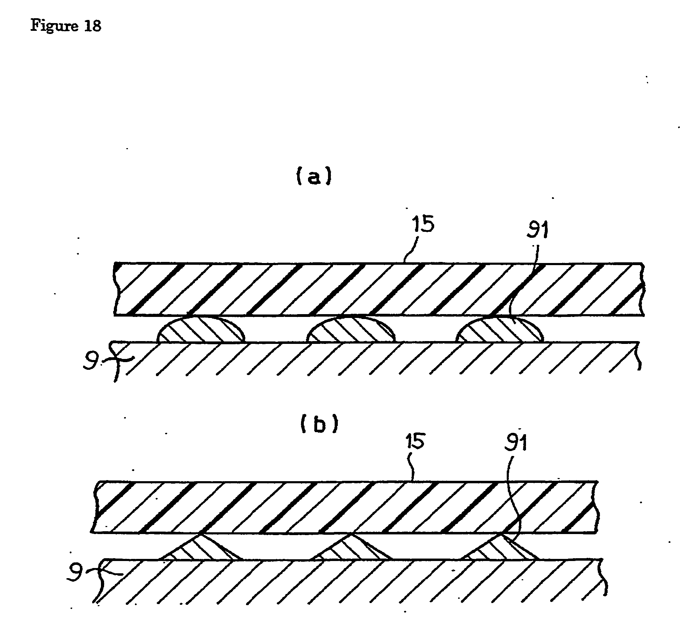

On a surface of the inner cylinder 9 in the vacuum chamber 10 may be formed a number of small protuberances 91 as shown in Figs. 18(a) and 18(b). The protuberances 91 shown in Fig. 18(a) have curved surfaces and are independent. By being provided such protuberances 91, the surface of the inner cylinder 9 has uneven structure. The uneven structure reduces an area of the surface of the inner cylinder 9 contacting a multilayer polyolefin foamed sheet 15 and makes the multilayer polyolefin foamed sheet slip easily. That is, it is preferable that the surface of the inner cylinder 9 is not level but is in uneven levels in order to reduce the contacting area.

It is preferable that the area of the surface of the inner cylinder 9 in contact with the multilayer polyolefin foamed sheet 15 is reduced, by the irregularities, to not less than 10% and not more than 80% the area in the case where the protuberances are not present.

It is more preferable that the protuberances 91 or the surface of the inner cylinder 9 having the protuberances 91 are plated with, for example, Teflon. This makes the slide of the multilayer polyolefin foamed sheet 15 to be smoother, decreasing the probability that the surfaces of the multilayer polyolefin foamed sheet are scarred.

Patterns of the protuberances 91 shown in Figs. 18(a) and 18(b) are merely examples, and there is no particular limitation on the pattern of the protuberances. A grain pattern and a satin pattern are preferably applied, for example. The formation of the protuberances in such a pattern and their plating are more preferably carried out on not only the surface of the inner cylinder 9 but also a surface of the outer cylinder 8, and alternatively may be carried out on only a part of them. In the case where a porous member is used for the evacuation, it is preferable that the formation of the protuberances in a pattern and their plating are carried out on both the metallic surface of the inner cylinder 9 and the porous member. The formation of the protuberances may be carried out on only one of the metallic surface and the porous member.

Moreover, although the protuberances 91 having the same size may be arranged in line as shown in Figs. 4 (a) and 4(b), they may be differ in size. As for configurations of the protuberances, they preferably have a curved surface (see Fig. 4(a)), but the configuration thereof is not particularly limited. It may be a pyramid or a cone (see Fig. 4(b)).

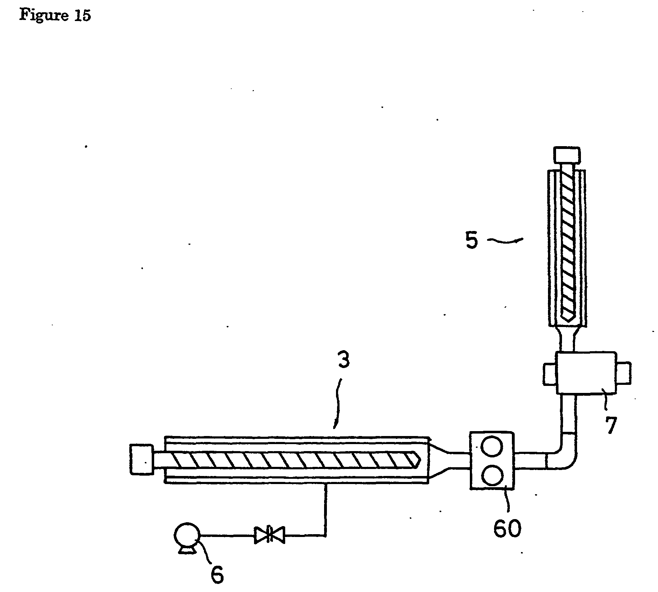

Fig. 15 illustrates an example of an apparatus for producing a multilayer polyolefin foamed sheet in which a gear pump 60 is provided between a first extruder 3 equipped with a pump 6, which is a foaming agent-supplying device, and a circular die 7. To the circular die 7 is jointed a second extruder 5 for extruding a thermoplastic resin for forming a non-foamed layer.

Laminating and adhering two multilayer polyolefin foamed sheets having a three-layer structure obtained produces a multilayer polyolefin foamed sheet having three non-foamed layers and having a structure of non-foamed layer/ foamed layer/non-foamed layer/non-foamed layer/foamed layer/non-foamed layer.

In the producing apparatus 2, there may be used raw materials which are the same as those used in the producing method of the present invention described previously.

Next, the foamed sheet of the present invention will be described.

In the production of the foamed sheet of the present invention can be used raw materials which are the same as those used in the producing method of the present invention describe above. A method for producing the foamed sheet of the present invention may be one which is the same as the producing method of the present invention described above.

The foamed sheet of the present invention can be used for various applications. Concrete applications include containers for foods including microwavable containers (HMR), heat insulating materials, cushioning materials for sporting goods and crating materials, insulators, automotive parts such as ceiling materials for automobiles, sealing materials, construction materials and applications in the aerospace industry using resins required to have light weight, heat insulating properties and the like.

Further, explanation will be made on the foamed sheet 2 In the production of the foamed sheet 2, there can be used raw materials which are the same as those used in the producing method 2 describe above. A method for producing the foamed sheet 2 may be one which is the same as the producing method 2 described above.

The foamed sheet 2 relates to a multilayer polyolefin foamed sheet having a gas barrier resin layer. Applications thereof include containers required to have gas barrier properties, heat insulation properties, light weight or the like such as containers for foods or sheets suited to be used in the production of such containers.

EXAMPLES

(Example 1: The producing method of the present invention)

A multilayer polypropylene foamed sheet was produced by means of the producing apparatus shown in Fig. 1 using a polypropylene (manufactured by Sumitomo Chemical Co., Ltd.) as a material for forming a polyolefin foamed layer and a polypropylene with a long-chain branch, PF814, (manufactured by Montell) as a material for forming a polyolefin non-foamed layer.

A 50 mm$\phi$ twin screw extruder and a 90 mm$\phi$ single screw extruder were, respectively, used as a first extruder for extruding a material for forming a polyolefin foamed layer and a second extruder for extruding a material for forming a polyolefin non-foamed layer. As an extrusion die was used a circular die shown in Fig. 2 which can extrude two kinds of materials into a three-layer tube. To the extrusion die was jointed a mandrel with the maximum diameter of 210 mm for extending the tubular laminated foam extruded.

To the polypropylene, the material for forming a polyolefin foamed layer, was blended 1 part by weight, based on 100 parts by weight of the resin, of Hydrocerol (manufactured by Boehlinger Ingelheim Chemicals, Inc.), a nucleating agent. The blend was supplied into the hopper of the first extruder. At near the center of the cylinder of the first extruder where melting of the resin had advanced, 1 part by weight of carbonic acid gas as a foaming agent was pumped with high pressure. The mixture in a state where the raw material and the carbonic acid gas had been kneaded enough was sent into the extrusion die. The material for forming a polyolefin foamed layer and that for forming a polyolefin non-foamed layer were laminated in their molten states in the extrusion die and then extruded in a tubular form. The extrudate was cooled and extended (blown-up) along the mandrel. The resulting tubular multilayer polypropylene foamed sheet was incised at one point with a cutter to be opened and wound up as a flat sheet with a haul-off device.

The resulting multilayer polypropylene foamed sheet had a three-layer structure of non-foamed layer/foamed layer/non-foamed layer. The sheet had a width of 650 mm, a thickness of 1 mm, an expansion ratio of 4 times, an extension ratio in its transverse direction of twice and that in its longitudinal direction of 1.2 time. This multilayer polypropylene foamed sheet was excellent in both surface smoothness and vacuum formability

(Example 2: The producing method 2)

1) Material for forming polyolefin foamed layer: The polymer produced in the first stage had an intrinsic viscosity of 7.7 dl/g. A polypropylene polymer having an intrinsic viscosity of 1.9 dl/g was synthesized in a second stage which was conducted subsequent to the first stage. To 100 parts by weight of powder of this polymer, 0.1 part by weight of calcium stearate, 0.05 part by weight of Irganox 1010 (trade name, manufactured by Ciba-Geigy Ltd.) and 0.2 part by weight of Sumilizer BHT (trade name, manufactured by Sumitomo Chemical Co., Ltd.) were added, mixed and melt-kneaded at 230°C, yielding pellets with an MFR of 12, which was used as the material for forming a polyolefin foamed layer.
2) Material for forming polyolefin non-foamed layer: Polypropylene with a long-chain branch manufactured by Montell (PF814) was used.
3) Material for forming gas barrier resin layer:

A saponified product of an ethylene/vinyl acetate copolymer having an ethylene content of 44 mole% and a saponification degree of not less than 98% (EP-E105A manufactured by Kuraray Co., Ltd., MFR=3.1) for a gas barrier resin layer, a polypropylene (Polypropylene FL8115 manufactured by Sumitomo Chemical Co., Ltd., MFR=7) for the outermost layer and an acid-modified polypropylene (Admer QF551 manufactured by Mitsui Petrochemical Industries, Ltd., MFR=5.7) for adhesive layers were co-extruded into a film having a thickness composition of [adhesive layer/barrier layer/adhesive layer/outermost layer = 10/30/10/50 (unit: $\mu$m)], producing a gas barrier resin sheet whose thickness distribution, Tmax/Tmin, measured in its area of 25 cm$^2$ was 1.0.
This gas barrier resin sheet was used in the production of a multilayer polyolefin foamed sheet.

(Comparative Example 1)

As a material for forming a polyolefin foamed layer and that for forming a polyolefin non-foamed layer, those the same as in Example 2 were used.
Material for gas barrier resin layer: Ethylene/vinyl alcohol copolymer resin manufactured by Kuraray Co., Ltd. (Eval EP-F101) was used. A film, satisfying a condition of thickness distribution Tmax/Tmin=1.3, processed from the above material was used as a gas barrier resin sheet.

(Extrusion foaming, test)

An apparatus (having the composition illustrated in Fig. 1) in which a 120 mm$\phi$ circular die 7 was jointed to both a 50 mm$\phi$ twin screw extruder 3 and a 32 mm$\phi$ single screw extruder 5 was used. A raw material prepared by blending 1 PHR of a nucleating agent (Hydrocerol manufactured by Boehringer Ingelheim Chemicals, Inc.) to the propylene-based polymer used for a foamed layer was thrown into a hopper provided to the extruder 3 and 1 PHR of carbonic acid gas was fed at a position of the extruder 3 where the raw material has been melted enough. The raw material and the carbonic acid gas were melt-kneaded enough and then pumped to the die 7. The melted mixture for forming a foamed layer and a melted resin for forming a non-foamed sent by the extruder 5 were laminated in the die and then extruded. The extrudate was cooled and blown-up along a mandrel 9 placed right after the die. Two slits were cut in the resulting cylindrical foamed sheet with a cutter. The cylinder was opened to form two flat sheets, which sandwiched therebetween and were adhered to a substrate forming a gas barrier layer. The resulting multilayer polyolefin laminated foamed sheet was wound up with a haul-off device 11.

(Evaluation of vacuum foamability)

The resulting multilayer polyolefin laminated foamed sheet was heated with a far infrared heater so that the surface temperature of its foam became from 130°C to 160°C, and was vacuum-formed using a cylindrical female mold member.

(Evaluation of appearance)

A ratio of an area where appearance failures such as depressions and uneven thickness were found to the surface area of the vacuum-formed product (an appearance failure area in the product/the surface area of the product) was calculated. The higher this ratio, the poorer the appearance. The lower the ratio, the better the appearance. The results of Example 2 and Comparative Example 1 are shown in Table 1.

Table 1

|  | Example 2 | Comparative Example 1 |
|---|---|---|
| Thickness of multilayer polypropylene foamed sheet | 1 mm | 1 mm |
| Thickness of non-foamed layer | 70 μm | 70 μm |
| Thickness distribution of gas barrier resin layer | 1.0 | 1.3 |
| Expansion ratio of foamed layer | 4 times | 4 times |
| Overall rating of appearance | 0.01 | 0.5 |

(Example 3: The producing apparatus 2)

A multilayer polypropylene foamed sheet was produced in the same manner as Example 1 using a polypropylene (manufactured by Sumitomo Chemical Co., Ltd.) as a material for forming a polyolefin foamed layer, a polypropylene having a long-chain branch, PF814, (manufactured by Montell) as a material for forming a polyolefin non-foamed layer and a producing apparatus schematically shown in Fig. 9.

(Comparative Example 2)

For comparison, a multilayer polyolefin foamed sheet was produced by a method in which a laminate tube in a molten state comprising a material for forming a polyolefin foamed layer and that for forming a polyolefin non-foamed layer was once extruded into the atmosphere to form a foam, which is then heated on its surface and sent into a vacuum chamber. The resulting multilayer polyolefin foamed sheet had an expansion ratio of at most eight times and its surface condition was inferior to that of the foamed sheet of the present invention described above.

(Example 4: the foamed sheet of the present invention)

(Material for forming polyolefin foamed layer)

As a material for forming a polyolefin foamed layer was used a polypropylene produced by two-stage polymerization. The polymerization method thereof will be explained below.

(1) Preparation of solid catalyst

A 200-L stainless steel reactor equipped with a stirrer was replaced with nitrogen. Thereafter, 80 L of hexane, 6.55 mole of titanium tetrabutoxide, 2.8 mole of diisobutyl phthalate, and 98.9 mole of tetraethoxysilane were charged therein, resulting in a homogeneous solution. Then, 51 L of butylmagnesium chloride solution in diisobutyl ether with a concentration of 2.1 mole/L was added dropwise slowly over 5 hours while maintaining the temperature in the reactor at 5°C. After the dropping was completed, the mixture was further stirred for one hour at room temperature, followed by solid-liquid separation at room temperature. Then, washing with 70 L of toluene was repeated three times. Subsequently, toluene was added so as to adjust the slurry concentration to 0.6 kg/L. A mixed solution of 8.9 mole of n-butyl ether and 274 mole of titanium tetrachloride and then 20.8 mole of phthaloyl chloride were added to the resulting slurry, which was then subjected to a reaction at 110°C for 3 hours. After the reaction, the slurry was washed with toluene at 95°C twice. After adjusting the slurry concentration to 0.6 kg/L, 3.13 mole of diisobutyl phthalate, 8.9 mole of di-n-butyl ether and 137 mole of titanium tetrachloride were added and a reaction was carried out at 105°C for one hour. After the reaction was completed, solid-liquid separation was carried out at the same temperature, and the resulting solid was washed twice with 90 L of toluene at the same temperature. Subsequently, the slurry concentration was adjusted to 0.6 kg/L, and then 8.9 mole of di-n-butyl ether and 137 mole of titanium tetrachloride were added and a reaction was carried out at 95°C for one hour. After the reaction was completed, solid-liquid separation was carried out at the same temperature, and the resulting solid was washed three times with 90 L of toluene. Subsequently, the slurry concentration was adjusted to 0.6 kg/L, and then 8.9 mole of n-butyl ether and 137 mole of titanium tetrachloride were added and a reaction was carried out at 95°C for one hour. After the reaction was completed, solid-liquid separation was carried out at the same temperature, and the resulting solid was washed three times with 90 L of toluene and three times with 90 L of hexane and dried under reduced pressure to yield 11.0 kg of a solid catalyst component.

The resulting solid catalyst component contained 1.9% by weight of titanium atom, 20% by weight of magnesium atom, 8.6% by weight of phthalic acid ester, 0.05% by weight of ethoxy group, and 0.21% by weight of butoxy group and had good particle properties free from fine powder.

(2) Preactivation of solid catalyst component

To an autoclave equipped with a stirrer, with an internal volume of 3 L, made from SUS, 1.5 L of n-hexane sufficiently dehydrated and degassed, 37.5 mmole of triethylaluminum, 3.75 mmole of t-butyl-n-propyldimethoxysilane, and 15 g of the above-described solid catalyst were added. While maintaining the temperature in the autoclave at 5 to 15°C, 15 g of propylene was continuously supplied over 30 minutes to perform pre-activation.

(3) Polymerization of propylene-based polymer

First stage

In a first polymerization vessel with an internal volume of 300 L made from SUS, a liquid propylene was supplied at 57 kg/h so as to keep the polymerization temperature at 60°C and the polymerization pressure at 27 kg/cm$^2$G. At the same time, triethylaluminum at 1.3 mmole/h, t-butyl-n-propyldimethoxysilane at 0.13 mmole/h and the preactivated solid catalyst at 0.51 g/h were continuously supplied and propylene polymerization was conducted substantially in the absence of hydrogen, producing 2.0 kg/h of a polymer. The amount of the polymer formed per gram of the catalyst was' 3920 g. Some of the resulting polymer was sampled and analyzed to be found that its intrinsic viscosity was 7.7 dL/g. The polymer produced was transferred continuously to a second polymerization vessel without being deactivated.

Second stage

In a fluidized bed reactor (the second polymerization vessel) with an internal volume of 1 m$^3$ equipped with a stirrer, polymerization of propylene was continuously performed to yield 18.2 kg/h of a polymer while propylene and hydrogen were supplied so as to keep the polymerization temperature at 80°C, the polymerization pressure at 18 kg/cm$^2$G and the hydrogen concentration in the gas-phase at 8 vol% and while the catalyst-containing polymer transferred from the first polymerization vessel, triethylaluminum at 60 mmole/h and t-butyl-n-propyldimethoxysilane at 6 mmole/h were supplied. The intrinsic viscosity of this polymer was 1.9 dL/g.

Calculating from the foregoing data, the amount of the polymer formed in the polymerization in the second stage was 31760 g per gram of the catalyst. A ratio of the weight of the polymer polymerized in the first polymerization vessel to that of the polymer polymerized in the second polymerization vessel was 11:89. The intrinsic viscosity of the polymer in the part formed in the polymerization in the second stage was 1.2 dL/g.

(4) Pelletization of polymer

To 100 parts by weight of the polymer particles obtained in the two-stage reaction, 0.1 parts by weight of calcium stearate, 0.05 parts by weight of Irganox 1010 (manufactured by Ciba-Geigy Ltd.) and 0.2 parts by weight of Sumilizer BHT (manufactured by Sumitomo Chemical Co., Ltd.) were added and mixed, followed by melt-kneading at 230°C to yield pellets with MFR of 12.

<Test series 1>

(Material 1 for forming a polyolefin non-foamed layer: Polypropylene with a long-chain branch)

As a material for forming a polyolefin non-foamed layer, a polypropylene with a long-chain branch, PF-814, manufactured by Montell (melting point 159.0°C, crystallizing temperature 130.1°C, MI 2.2 g/10 minutes) was used.

(Comparative Example 3)

A material for foming a polyolefin foamed layer used was the same as that used in Examples.

As a material for forming a polyolefin non-foamed layer, a polypropylene with no long-chain branch manufactured by Sumitomo Chemical Co., Ltd. (Noblene W101, MI 8-10 g/10 minutes, homopolymer of propylene) was used.

<Test series 2>

(Material 2 for forming a polyolefin non-foamed layer: Polyolefin-based adhesive resin with a long-chain branch)

As a material for forming a polyolefin non-foamed layer, a polyolefin-based resin with a long-chain branch, Admer LF500, manufactured by Mitsui Petrochemical Industries, Ltd. (melting point 135°C, density 0.89 g/cm$^3$, MI 5.7 g/10 minutes) was used.

(Comparative Example 4)

As a material for forming a polyolefin non-foamed layer, a polyolefin-based resin with no long-chain branch, Admer NF500, manufactured by Mitsui Petrochemical Industries, Ltd. (melting point 120°C, density 0.92 g/cm$^3$, MI 3.5 g/10 minutes) was used.

(Extrusion foaming test)

An apparatus in which a 90 mmφ circular die 7 was jointed to both a 50 mmφ single screw extruder 3 and a 32 mmφ single screw extruder 5 was used. A raw material prepared by blending 1 part by weight of a nucleating agent (Hydrocerol manufactured by Boehringer Ingelheim Chemicals, Inc.) to 100 parts by weight of the propylene-based polymer used for a foamed layer was thrown into a hopper provided to the extruder 3 and 1 part by weight of carbonic acid gas was fed at a position of the extruder 3 where the raw material has been melted enough. The raw material and the carbonic acid gas were melt-kneaded enough and then pumped to the die 7. The melted mixture for forming a foamed layer and a melted resin for forming a non-foamed sent by the extruder 5 were laminated in the die and then extruded. The extrudate was cooled and blown-up along a mandrel 9 placed right after the die. A slit was cut in the resulting cylindrical foamed sheet with a cutter. The sheet was opened to form a flat sheet and was wound up with a haul-off device 11.

(Vacuum forming)

The resulting multilayer polyolefin foamed sheet was heated with a far infrared heater so that the surface temperature of its foam became from 130°C to 160°C, and was vacuum-formed using a cylindrical female mold member.

(Evaluation of appearance)

A ratio of an area where appearance failures such as depressions and uneven thickness were found to the surface area of the vacuum-formed product (an appearance failure area in the product/the surface area of the product) was calculated. The higher this ratio, the poorer the appearance. The lower the ratio, the better the appearance. The results of Example 4 and Comparative Examples 3 and 4 are shown in Table 2.

Table 2

|  | Test series 1 | | Test series 2 | |
| --- | --- | --- | --- | --- |
|  | Example 4 | Comparative Example 3 | Example 4 | Comparative Example 4 |
| Thickness of multilayer polypropylene foamed sheet | 1mm | 1mm | 1mm | 1mm |
| Thickness of non-foamed layer | 70 μm | 70 μm | 70 μm | 70 μm |
| Expansion ratio of non-foamed layer | 1.0 time | 1.0 time | 1.0 time | 1.0 time |
| Expansion ratio of foamed layer | 4 times | 4 times | 4 times | 4 times |
| Rating of appearance | 0.01 | 0.60 | 0.01 | 0.60 |

The results show that the multilayer polyolefin foamed sheet has a smooth surface and good appearance.

[Example 5: The foamed sheet 2]

(Material for forming a polyolefin foamed layer)

As a material for forming a polyolefin foamed layer, a polypropylene produced by the two-stage polymerization was used. The polymerization method was the same as that described in Example 4.

(Material for forming a non-foamed layer)

As a material for forming a polyolefin non-foamed layer, a polypropylene with a long-chain branch, PF-814, manufactured by Montell (melting point 159.0°C, crystallizing temperature 130.1°C, MI 2.2 g/10 minutes) was used.
A saponified product of an ethylene/vinyl acetate copolymer having an ethylene content of 44 mole% and a saponification degree of not less than 98% (EP-E105A manufactured by Kuraray Co., Ltd., MFR=3.1) for a gas barrier resin layer, a polypropylene (Polypropylene FL8115 manufactured by Sumitomo Chemical Co., Ltd., MFR=7) for the outermost layer and an acid-modified polypropylene (Admer QF551 manufactured by Mitsui Petrochemical Industries, Ltd., MFR=5.7) for adhesive layers were co-extruded into a film having a thickness composition of [adhesive layer/barrier layer/adhesive layer/outermost layer =10/30/10/50 (unit: $\mu$m)], producing a gas barrier resin sheet whose thickness distribution, Tmax/Tmin, measured in its area of 25 cm$^2$ was 1.0.
This gas barrier resin sheet was used in the production of a multilayer polyolefin foamed sheet.

(Comparative Example 5)

As a material for forming a polyolefin foamed layer and that for forming a polyolefin non-foamed layer, those the same as in Example 5 were used.
A material for forming a gas barrier resin layer was also the same as that used in Example 5, but the gas barrier resin sheet had a thickness distribution measured in its area of 25 cm$^2$, Tmax/Tmin=1.3.

(Extrusion foaming test)

An apparatus in which a 90 mm$\phi$ circular die 7 was jointed to both a 50 mm$\phi$ single screw extruder 3 and a 32 mm$\phi$ single screw extruder 5 was used. A raw material prepared by blending 1 part by weight of a nucleating agent (Hydrocerol manufactured by Boehringer Ingelheim Chemicals, Inc.) to 100 parts by weight of the propylene-based polymer used for a foamed layer was thrown into a hopper provided to the extruder 3 and 1 part by weight of carbonic acid gas was fed at a position of the extruder 3 where the raw material has been melted enough. The raw material and the carbonic acid gas were melt-kneaded enough and then pumped to the die 7. The melted mixture for forming a foamed layer and a melted resin for forming a non-foamed sent by the extruder 5 were laminated in the die and then extruded. The extrudate was cooled and blown-up along a mandrel 9 placed right after the die. Two slits were cut in the resulting cylindrical foamed sheet with a cutter to form two flat sheets with the same width were formed. A gas barrier resin sheet was supplied to between the sheets. They were pressed and laminated together and wound with a haul-off device 11.

(Vacuum forming)

The resulting multilayer polyolefin foamed sheet was heated with a far infrared heater so that the surface temperature of its foam became from 130°C to 160°C, and was vacuum-formed using a cylindrical female mold member.

(Evaluation of appearance)

A ratio of an area where appearance failures such as depressions and uneven thickness were found to the surface area of the vacuum-formed product (an appearance failure area in the product/the surface area of the product) was calculated. The higher this ratio, the poorer the appearance. The lower the ratio, the better the appearance. The results of Example 5 and Comparative Example 5 are shown in Table 3.

Table 3

|  | Example 5 | Comparative Example 5 |
|---|---|---|
| Thickness of multilayer polypropylene foamed sheet | 1 mm | 1 mm |
| Thickness of non-foamed layer | 70 $\mu$m | 70 $\mu$m |

(continued)

|  | Example 5 | Comparative Example 5 |
|---|---|---|
| Expansion ratio of non-foamed layer | 1.0 time | 1.0 time |
| Thickness distribution of gas barrier resin layer | 1.0 | 1.3 |
| Expansion ratio of foamed layer | 4 times | 4 times |
| Overall rating of appearance | 0.01 | 0.5 |

(Example 6: The container body)

The container body was produced by the method described below and measured its physical properties for comparison with container bodies of Comparative Examples. The following measuring method was adopted.

(1) Surface roughness

The measurement of surface roughness of a container body was carried out using a tracing-type roughness meter, surfcom 570A manufactured by Tokyo Seimitsu Co., Ltd. A sheet-like specimen with a predetermined shape was first set, and its surface roughness (Ra) was measured over a length of 1 cm from an optional point in the specimen at a scanning speed of 0.3 mm/second. The measurement of surface roughness (Ra) was conducted according to the method for measuring arithmetical mean deviation of profile (Ra) provided in JIS B0601. This measurement was conducted at optional three points in the specimen. The roughness of the container body was evaluated by considering the average of the measurements as its Ra.

(2) Evaluation of appearance

Appearance of the foamed container body was evaluated visually. Having great surface smoothness is indicated by ○ and having poor surface smoothness by ×.

A multilayer polypropylene foamed sheet having a thickness of 1.8 mm and an expansion ratio of 3.9 times was heated with a far infrared heater so that its surface temperature reached 150°C and was formed by vacuum forming into a container body 1 having an inner diameter of 150 mm and a depth of 39 mm shown in Fig. 16. Surface roughness was measured at three points in a flange 2 of container body 1. The average, Ra, of the three points in the flange 2 was 4.7 $\mu$m (measured values: 4.5 $\mu$m, 5.3 $\mu$m, 4.2 $\mu$m).

The multilayer polypropylene foamed sheet used here was a sheet having a two-kind-three-layer structure of non-foamed layer/foamed layer/non-foamed layer. For the foamed layer and the non-foamed layer, the following resins were used.

(1) Foamed layer

Material for forming a polyolefin foamed layer: The polymer produced in the first stage had an intrinsic viscosity of 7.7 dl/g. A polypropylene polymer having an intrinsic viscosity of 1.9 dl/g was synthesized in a second stage which was conducted subsequent to the first stage. To 100 parts by weight of powder of this polymer, 0.1 part by weight of calcium stearate, 0.05 part by weight of Irganox 1010 (trade name, manufactured by Ciba-Geigy Ltd.) and 0.2 part by weight of Sumilizer BHT (trade name, manufactured by Sumitomo Chemical Co., Ltd.) were added, mixed and melt-kneaded at 230°C, yielding pellets with an MFR of 12, which was used as the material for forming a polyolefin foamed layer.

(2) Non-foamed layer

A polypropylene with a long-chain branch (melting point 159.0°C, crystallizing temperature 130.1°C, MI 2.2 g/10 minutes) was used. Using these resins, a foamed sheet was produced by means of an extruder depicted in Fig. 2.

<Extrusion foaming test>

An apparatus in which a 120 mm$\phi$ circular die 7 was jointed to both a 50 mm$\phi$ single screw extruder 3 and a 32 mm$\phi$ single screw extruder 5 was used. A raw material prepared by blending 1 PHR of a nucleating agent (Hydrocerol manufactured by Boehringer Ingelheim Chemicals, Inc.) to the propylene-based polymer used for a foamed layer was thrown into a hopper provided to the single screw extruder 3 and 1 PHR of carbonic acid gas was fed at high pressure at a position of the single screw extruder 3 where the raw material has been melted enough. The raw material and the carbonic acid gas were melt-kneaded enough and then pumped to the die 7. The melted mixture for forming a foamed layer and a melted resin for forming a non-foamed sent by the single screw extruder 5 were laminated in the die and then extruded. The extrudate was cooled and blown-up along a mandrel 9 placed right after the die. A slit was cut in the resulting cylindrical foamed sheet with a cutter 30. The cylinder was opened and formed into flat sheets 15 with rollers 32. These sheets were wound up with a haul-off device 11. In Fig. 2, the numeral "6" indicates a supplying pump for supplying a foaming agent, carbonic acid gas. Here, the single screw extruders were used as extruders. However, an extruder is not limited to a single screw extruder and a twin screw extruder may be used.

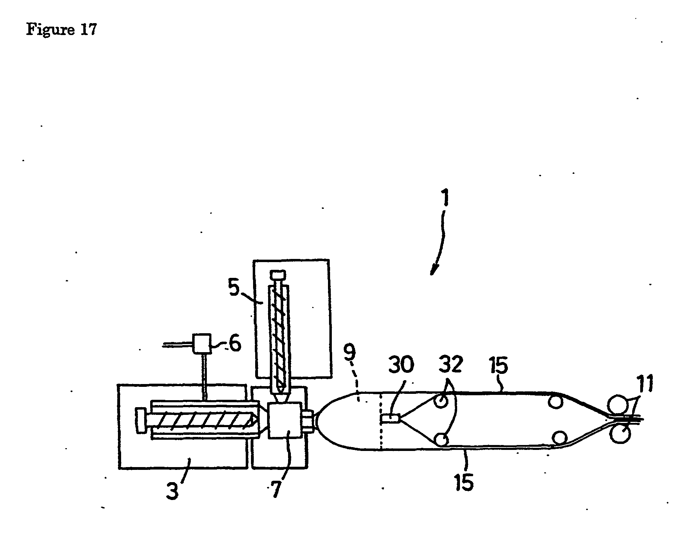

Fig. 2 is a cross section of a circular die suitable for working of the present invention, which was used in the producing apparatus illustrated in Fig. 17. The die used in this example was a circular die. In the die 7 are formed channels 23a and 23b for a resin for forming foamed layers and channels 24, 24a, 24b, 24c and 24d for a resin for forming non-foamed layers.

A head 21 of the first extruder 3 is jointed to the end of the die 7 in its source side of the resin channel direction and a head 22 of the second extruder 5 is jointed to the side of the die in its source side of the resin channel direction. A melted resin for foming the foamed layer supplied from the head 21 enters the channel 23a first and then is sent toward the outlet of the die. The melted resin is divided on the way by means of a pass P and sent to the channel 23b.

On the other hand, the melted resin for forming the non-foamed layer is supplied from the head 22 of the second extruder 5 and divided through the channel 24 into the channels 24a and 24b. This resin is supplied so as to cover the both surfaces of a foamed layer so as to adhere to the both sides of a foamed layer in the channel 23b and is united in layers in a channel 25a. The melted resins supplied to the channels 24a and 24b pass through dividing channels (not shown) similar to a pass P and are supplied to channels 24c and 24d, respectively, so as to cover the both surfaces of a foamed layer in the channel 23a and united in layers in a channel 25b.

The melted resin which has been united into a cylindrical form having a three-layer structure in the channels 25a and 25b is extruded from the outlet 26 of the die. By the release of the melted resin under atmospheric pressure, carbonic acid gas contained in the resin for forming a polyolefin foamed layer expands to'form cells, forming a foamed layer.

(Comparative Example 6)

A container body was formed in the same manner as Example 6, except that a multilayer polyolefin foamed sheet was produced using the polypropylene (melting point 159.0°C, crystallizing temperature 130.1°C, MI 2.2 g/10 minutes) used for the non-foamed layer in Example 6, for both a foamed and non-foamed layers.

Surface roughness was measured at three points in a flange of the container body in the same manner as Example 6. The average, Ra, of the three points in the flange was 7.1 $\mu$m (measured values: 5.7 $\mu$m, 7.1 $\mu$m, 8.6 $\mu$m).

The evaluation results in Example 6 and Comparative Example 6 are shown in Table 4.

Table 4

|  | Example 6 | Comparative Example 6 |
| --- | --- | --- |
| Thickness of multilayer foam (mm) | 1 | 1 |
| Thickness of non-foamed layer ($\mu$m) | 70 | 70 |
| Expansion ratio of non-foamed layer (time) | 1.0 | 1.0 |
| Expansion ratio of foamed layer (time) | 4 | 4 |
| Ra (Surface roughness) ($\mu$m) | 4.7 | 7.1 |
| Appearance rating | very good | not so good |

As is clear from Table 4, the container body of example 6 had very good surface smoothness, whereas the container body of Comparative Example 6 was not so good in appearance. The container body of the present invention provided extremely excellent feeling when being carried in hands.

(Example 7)

Although in Example 6 was shown the example wherein the multilayer polyolefin foamed sheet having the two-kind-three-layer structure of non-foamed layer/foamed layer/non-foamed layer, the container body of example 6 is not limited to this and may be other multi-kind-multi-layer multilayer polyolefin foamed sheet. For example, it may have a five-layer structure of non-foamed layer/foamed layer/non-foamed gas barrier resin layer/foamed layer/non-foamed layer and a seven-layer structure of non-foamed layer/foamed layer/non-foamed layer/non-foamed gas barrier resin layer/non-foamed layer/foamed layer/non-foamed layer. These multilayer polyolefin foamed sheet can be produced by methods similar to one described above.

The gas barrier resin layer, which is a non-foamed layer, is not particularly limited and may be layers of resin used for gas barrier resin sheets in the producing method 2.

**Claims**

1. A method for producing a multilayer polyolefin foamed sheet comprising at least one polyolefin foamed layer and at least one polyolefin non-foamed layer, wherein the method uses a producing apparatus comprising at least one first extruder for extruding a material for forming a polyolefin foamed layer wherein the first extruder is equipped with a foaming agent-supplying device for supplying a foaming agent to a cylinder, at least one second extruder for extruding a material for forming a polyolefin non-foamed layer and at least one circular extrusion die for co-extruding the material for forming a polyolefin foamed layer and the material for forming a polyolefin non-foamed layer therethrough to form the multilayer polyolefin foamed sheet, the method comprising:

   a melt kneading step in which, in the first extruder, a resin material for forming a polyolefin foamed layer is melted and the melted resin material for forming a polyolefin foamed layer and a foaming agent supplied from the foaming agent-supplying device are mixed to form the material for forming a polyolefin foamed layer;
   a melting step in which the material for forming a polyolefin non-foamed layer is melted in the second extruder; and
   a co-extruding step in which the material for forming a polyolefin foamed layer and the material for forming a polyolefin non-foamed layer in their melted states are co-extruded into a cylindrical form into atmospheric pressure though the extrusion die and the extruded material for forming a polyolefin foamed layer is foamed to form the multilayer polyolefin foamed sheet;
   wherein the co-extruding step is conducted under conditions satisfying the relationship of

$$10 \geq Q \text{ (kg/hr)}/W \text{ (mm)} \geq 0.3$$

   wherein Q (kg/hr) denotes the amount of the resin to be extruded through the extrusion die and W (mm) denotes a die lip diameter.

2. The method for producing a multilayer polyolefin foamed sheet according to claim 1, further comprising a laminating step for laminating at least one multilayer polyolefin foamed sheet produced.

3. The method for producing a multilayer polyolefin foamed sheet according to claim 2, wherein the multilayer polyolefin foamed sheet co-extruded is folded up, superimposed and laminated together in the laminating step.

4. The method for producing a multilayer polyolefin foamed sheet according to claim 2, wherein the multilayer polyolefin foamed sheet is laminated as it is or superimposed and laminated after being incised continuously along its longitudinal direction at at least one point.

5. The method for producing a multilayer polyolefin foamed sheet according to claim 1, further comprising an extending step for extending the co-extruded multilayer polyolefin foamed sheet in a direction perpendicular to the extruding direction by means of an extending device, wherein the extending step is conducted after the co-extruding step.

6. The method for producing a multilayer polyolefin foamed sheet according to claim 5, wherein the extending device is a mandrel.

7. The method for producing a multilayer polyolefin foamed sheet according to claim 5, wherein an extending ratio achieved in the extending step is from 1.5 times to 4.5 times.

8. The method for producing a multilayer polyolefin foamed sheet according to claim 2, further comprising a preheating step for preheating the extruded multilayer polyolefin foamed sheet, wherein the preheating step is conducted before at least one of the laminating step.

9. A producing apparatus for producing a multilayer polyolefin foamed sheet comprising at least one polyolefin foamed layer and at least one polyolefin non-foamed layer, the apparatus comprising at least one first extruder for extruding a material for forming a polyolefin foamed layer wherein the first extruder is equipped with a foaming agent-supplying device for supplying a foaming agent to the cylinder, at least one second extruder for extruding a material for forming a polyolefin non-foamed layer and at least one circular extrusion die for co-extruding the material for forming a polyolefin foamed layer and the material for forming a polyolefin non-foamed layer therethrough to form the multilayer polyolefin foamed sheet, wherein the extruding die has a diameter at its die lip, W (mm), which is in the range of not smaller than (1/10) Q (kg/hr) and not greater than (10/3) Q (kg/hr) wherein Q (kg/hr) denotes the amount of the resin to be extruded through the extrusion die.

10. A multilayer polyolefin foamed sheet comprising a foamed layer and a non-foamed layer, wherein the foamed layer is composed of polyolefin and the non-foamed layer is composed of a polypropylene with a long-chain branch or a polyolefin-based adhesive resin with a long-chain branch.

11. The multilayer polyolefin foamed sheet according to claim 10, wherein the polyolefin forming the non-foamed layer has a branching index, [A], satisfying $0.20 \leq [A] \leq 0.98$.

12. The multilayer polyolefin foamed sheet according to claim 10, wherein the sheet has at least two non-foamed layers and has a structure of non-foamed layer/foamed layer/non-foamed layer.

13. The multilayer polyolefin foamed sheet according to claim 10, wherein the sheet has at least three non-foamed layers.

14. The multilayer polyolefin foamed sheet according to claim 10, wherein the foamed layer has an expansion ratio of from 2.5 to 40 times.

15. The multilayer polyolefin foamed sheet according to claim 10, wherein the foamed layer comprises polypropylene foam.

**Patentansprüche**

1. Verfahren zum Herstellen einer mehrlagigen geschäumten Polyolefinfolie, die wenigstens eine geschäumte Polyolefinschicht und wenigstens eine nicht-geschäumte Polyolefinschicht umfasst, wobei in dem Verfahren ein Herstellungsgerät verwendet wird, das wenigstens einen ersten Extruder zum Extrudieren eines Materials zum Bilden der geschäumten Polyolefinschicht umfasst, wobei der erste Extruder mit einer Anordnung für die Zuleitung des Schaumbildners ausgerüstet ist, um den Schaumbildner einem Zylinder zuzuleiten, und wenigstens einem zweiten Extruder zum Extrudieren eines Materials zum Bilden der nicht-geschäumten Polyolefinschicht und wenigstens eine kreisförmige Extrusionsdüse zum Coextrudieren des Materials zum Bilden der geschäumten Polyolefinschicht und des Materials zum Bilden der nicht-geschäumten Polyolefinschicht wodurch die mehrlagige geschäumte Polyolefinfolie gebildet wird, wobei das Verfahren umfasst:

einen Schritt des Schmelzeknetens, in dem im ersten Extruder ein Harzmaterial zum Bilden einer geschäumten Polyolefinschicht geschmolzen wird und das geschmolzene Material zum Bilden der geschäumten Polyolefinschicht und ein Schaumbildner, der durch die Anordnung für die Zuleitung des Schaumbildners zugeleitet wird, zum Bilden der geschäumten Polyolefinschicht gemischt werden;
einen Schmelzschritt, in dem das Material zum Bilden der nicht-geschäumten Polyolefinschicht im zweiten Extruder geschmolzen wird; und einen Coextrusionsschritt, in dem das Material zum Bilden der geschäumten Polyolefinschicht und das Material zum Bilden der nicht-geschäumten Polyolefinschicht im geschmolzenen Zustand in eine zylindrische Form unter Atmosphärendruck durch die Extrusionsdüse coextrudiert werden und das extrudierte Material zum Bilden der geschäumten Polyolefinschicht, zum Bilden der mehrschichtigen geschäumten Polyolefinfolie geschäumt wird;
wobei der Coextrusionsschritt unter Bedingungen durchgeführt wird, die der Beziehung

$$10 \geq Q \ (kg/Std.)/W \ (mm) \geq 0,3 \ \text{entsprechen,}$$

wobei Q (kg/Std.) die Menge an Harz bezeichnet, die durch die Extrusionsdüse extrudiert werden soll und W (mm) den Durchmesser der Düsenlippe.

2. Verfahren zum Herstellen einer mehrschichtigen geschäumten Polyolefinfolie nach Anspruch 1, das ferner einen Laminierschritt zum Laminieren wenigstens einer hergestellten mehrschichtigen geschäumten Polyolefinfolie umfasst.

3. Verfahren zum Herstellen einer mehrschichtigen geschäumten Polyolefinfolie nach Anspruch 2, wobei die coextrudierte, mehrschichtige geschäumte Polyolefinfolie zusammengefaltet, übereinander gelagert und zusammen im Laminierungsschritt laminiert wird.

4. Verfahren zum Herstellen einer mehrschichtigen geschäumten Polyolefinfolie nach Anspruch 2, wobei die mehrschichtige geschäumte Polyolefinfolie laminiert wird wie sie ist oder übereinander gelagert und laminiert wird, nachdem sie an wenigstens einem Punkt entlang ihrer longitudinalen Achse fortgesetzt eingeschnitten wurde.

5. Verfahren zum Herstellen einer mehrschichtigen geschäumten Polyolefinfolie nach Anspruch 1, das ferner einen Dehnungsschritt zum Dehnen der coextrudierten, mehrschichtigen geschäumten Polyolefinfolie senkrecht zur Extrusionsrichtung mittels eines Dehnungsgeräts umfasst, wobei der Dehnungsschritt nach dem Coextrusionsschritt durchgeführt wird.

6. Verfahren zum Herstellen einer mehrschichtigen geschäumten Polyolefinfolie nach Anspruch 5, wobei das Dehnungsgerät ein Dorn ist.

7. Verfahren zum Herstellen einer mehrschichtigen geschäumten Polyolefinfolie nach Anspruch 5, wobei die Dehnungsrate, die im Dehnungsschritt erreicht wird in einem Bereich von 1,5- bis 4,5-fach liegt.

8. Verfahren zum Herstellen einer mehrschichtigen geschäumten Polyolefinfolie nach Anspruch 2, das ferner einen Aufheizschritt zum Aufheizen der extrudierten mehrschichtigen Polyolefinfolie, wobei der Aufwärmschritt vor wenigstens einem der Laminierschritte durchgeführt wird.

9. Gerät zum Herstellen einer mehrlagigen geschäumten Polyolefinfolie, die wenigstens eine geschäumte Polyolefinschicht und wenigstens eine nicht-geschäumte Polyolefinschicht umfasst, wobei das Gerät wenigstens einen ersten Extruder, zum Extrudieren eines Materials zum Bilden der geschäumten Polyolefinschicht, umfasst, wobei der erste Extruder mit einer Anordnung für die Zuleitung des Schaumbildners ausgerüstet ist, um den Schaumbildner einem Zylinder zuzuleiten, und wenigstens einem zweiten Extruder zum Extrudieren eines Materials zum Bilden der nicht-geschäumten Polyolefinschicht und wenigstens eine kreisförmige Extrusionsdüse zum Coextrudieren des Materials zum Bilden der geschäumten Polyolefinschicht und des Materials zum Bilden der nicht-geschäumten Polyolefinschicht wodurch die mehrlagige geschäumte Polyolefinfolie gebildet wird, wobei die Extrusionsdüse an ihrer Lippe einen Durchmesser W (mm) aufweist, der in einem Bereich von nicht weniger als (1/10) Q (kg/Std.) und nicht größer als (10/3) Q (kg/Std.) liegt, wobei Q (kg/Std.) die Menge des zu extrudierenden Harzes durch die Extrusionsdüse angibt.

10. Mehrschichtige Polyolefinfolie, die eine geschäumte und eine nicht-geschäumte Schicht umfasst, wobei die geschäumte Schicht aus Polyolefin und die nicht-geschäumte Schicht aus Polypropylen mit einer langkettigen Verzweigung oder einem Harzklebstoff auf Polyolefinbasis mit einer langkettigen Verzweigung besteht.

11. Mehrschichtige geschäumte Polyolefinfolie nach Anspruch 10, wobei das Polyolefin, dass die nicht geschäumte Schicht bildet, einen Verzweigungsindex [A] aufweist, der $0,20 \geq [A] \geq 0,98$ entspricht.

12. Mehrschichtige geschäumte Polyolefinfolie nach Anspruch 10, wobei die Folie wenigstens zwei nicht-geschäumte Schichten und die Struktur nicht-geschäumte Schicht / geschäumte Schicht / nicht-geschäumte Schicht aufweist.

13. Mehrschichtige geschäumte Polyolefinfolie nach Anspruch 10, wobei die Folie wenigstens drei nicht-geschäumte Schichten aufweist.

14. Mehrschichtige geschäumte Polyolefinfolie nach Anspruch 10, wobei die geschäumte Schicht einen Dehnungsrate aufweist, die in einem Bereich von 2,5- bis 40-fach liegt.

15. Mehrschichtige geschäumte Polyolefinfolie nach Anspruch 10, wobei die geschäumte Schicht Polypropylenschaum umfasst.

**Revendications**

1. Procédé de fabrication d'un feuille de mousse multicouche en polyoléfine comprenant au moins une couche de mousse en polyoléfine et au moins une couche de non mousse en polyoléfine, dans lequel le procédé utilise un dispositif de fabrication comprenant au moins une première extrudeuse destinée à extruder un matériau pour former une couche de mousse en polyoléfine, dans lequel la première extrudeuse est munie d'un dispositif d'alimentation d'agent moussant destiné à alimenter un agent moussant à un cylindre, au moins une seconde extrudeuse destinée à extruder un matériau pour former une couche de non mousse en polyoléfine et au moins une filière circulaire destinée à coextruder le matériau pour former une couche de mousse en polyoléfine et le matériau pour former une couche de non mousse en polyoléfine à travers cette dernière afin de former la feuille de mousse multicouche en polyoléfine, le procédé comprenant :

   une étape de mélange en fusion, dans laquelle, dans la première extrudeuse, un matériau en résine pour former une couche de mousse en polyoléfine est fondu et le matériau en résine fondue pour former une couche de mousse en polyoléfine et un agent moussant alimenté depuis le dispositif d'alimentation en agent moussant sont mixés afin de former le matériau destiné à former une couche de mousse en polyoléfine ;
   une étape de fusion dans laquelle le matériau destiné à former une couche de non mousse en polyoléfine est fondu dans la seconde extrudeuse ; et
   une étape de coextrusion dans laquelle le matériau destiné à former une couche de mousse en polyoléfine et le matériau destiné à former une couche de non mousse en polyoléfine dans leurs états fondus sont coextrudés sous forme cylindrique dans la pression atmosphérique bien que la filière et le matériau extrudé destinés à former une couche de mousse en polyoléfine moussent pour former la feuille de mousse multicouche en polyoléfine ;
   dans lequel l'étape de coextrusion est effectuée dans des conditions remplissant le rapport de

   $$10 \geq Q(kg/hr)/W(mm) \geq 0,3$$

   dans lequel Q(kg/hr) décrit la quantité de résine à extruder via la filière et W(mm) décrit un diamètre de lèvre de filière.

2. Procédé de fabrication d'une feuille de mousse multicouche en polyoléfine selon la revendication 1, comprenant en outre une étape de stratification pour stratifier au moins une feuille de mousse multicouche en polyoléfine fabriquée.

3. Procédé de fabrication d'une feuille de mousse multicouche en polyoléfine selon la revendication 2, dans lequel la feuille de mousse multicouche en polyoléfine coextrudée est pliée, superposée et stratifiée avec l'étape de stratification.

4. Procédé de fabrication d'une feuille de mousse multicouche en polyoléfine selon la revendication 2, dans lequel la feuille de mousse multicouche en polyoléfine est stratifiée tel quel ou superposée et stratifiée après avoir été incisée de façon continue le long de sa direction longitudinale à au moins un point.

5. Procédé de fabrication d'une feuille de mousse multicouche en polyoléfine selon la revendication 1, comprenant en outre une étape d'extension destinée à étendre la feuille de mousse multicouche en polyoléfine coextrudée dans une direction perpendiculaire à la direction d'extrusion au moyen d'un dispositif d'extension, dans lequel l'étape d'extension est effectuée après l'étape de coextrusion.

6. Procédé de fabrication d'une feuille de mousse multicouche en polyoléfine selon la revendication 5, dans lequel le dispositif d'extension est un mandrin.

7. Procédé de fabrication d'une feuille de mousse multicouche en polyoléfine selon la revendication 5, dans lequel un facteur d'extension réalisé dans l'étape d'extension est compris entre 1,5 fois à 4,5 fois.

**8.** Procédé de fabrication d'une feuille de mousse multicouche en polyoléfine selon la revendication 2, comprenant en outre une étape de préchauffage destinée à préchauffer la feuille de mousse multicouche en polyoléfine extrudée, dans lequel l'étape de préchauffage est effectuée avant au moins l'une de l'étape de stratification.

**9.** Dispositif de fabrication destiné à fabriquer une feuille de mousse multicouche en polyoléfine comprenant au moins une couche de mousse en polyoléfine et au moins une couche de non mousse en polyoléfine, le dispositif comprenant au moins une première extrudeuse destinée à extruder un matériau pour former une couche de mousse en polyoléfine, dans lequel la première extrudeuse est munie d'un dispositif d'alimentation d'agent moussant destiné à alimenter un agent moussant au cylindre, au moins une seconde extrudeuse destinée à extruder un matériau destiné à former une couche de non mousse en polyoléfine et au moins une filière circulaire destinée à coextruder le matériau pour former une couche de mousse en polyoléfine et le matériau pour former une couche de non mousse en polyoléfine à travers cette dernière afin de former la feuille de mousse multicouche en polyoléfine, dans lequel la filière a un diamètre au niveau de sa lèvre, W(mm), qui se situe dans une plage pas inférieure à (1/10)Q(kg/hr) et pas supérieure à (10/3)Q(kg/hr), dans laquelle Q (kg/hr) décrit la quantité de résine à extruder via la filière.

**10.** Feuille de mousse multicouche en polyoléfine comprenant une couche de mousse et une couche de non mousse, dans laquelle la couche de mousse est composée de polyoléfine et la couche de non mousse est composée de polypropylène avec une branche à longue chaîne ou une résine adhésive à base de polyoléfine avec une branche à longue chaîne.

**11.** Feuille de mousse multicouche en polyoléfine selon la revendication 10, dans laquelle la polyoléfine formant la couche de non mousse a un indice de ramification, [A], répondant à 0,20≤[A]≤0,98.

**12.** Feuille de mousse multicouche en polyoléfine selon la revendication 10, dans laquelle la feuille possède au moins deux couches de non mousse et a une structure de couche de non mousse/couche de mousse/couche de non mousse.

**13.** Feuille de mousse multicouche en polyoléfine selon la revendication 10, dans laquelle la feuille possède au moins trois couches de non mousse.

**14.** Feuille de mousse multicouche en polyoléfine selon la revendication 10, dans laquelle la couche de mousse a un facteur d'expansion allant de 2,5 à 40 fois.

**15.** Feuille de mousse multicouche en polyoléfine selon la revendication 10, dans laquelle la couche de mousse comprend de la mousse en polypropylène.

Figure 1

Figure 2

Figure 3

Figure 4

Figure 5

Figure 6

Figure 7

Figure 8

EP 1 075 921 B1

Figure 9

42

Figure 10

Figure 11

(A)

(B)

Figure 12

Figure 13

(A)

33

9

(B)

41
42
33

43

Figure 14

Figure 15

Figure 16

Figure 17

Figure 18

( a )

15          91

9

( b )

15          91

9

Figure 19

(a)

(b)

(c)

Figure 20

(a)

(b)

(c)

Figure 21

(a)

(b)

Figure 22

(a)

(b)